# EUROPEAN PATENT APPLICATION

(11) **EP 4 661 551 A1**
(43) Date of publication of application: **10.12.2025**
(21) Application number: 23919124.0
(22) Date of filing: 03.02.2023
(51) Int. Cl.: H04W 72/23

(54) **SIDELINK POSITIONING REFERENCE SIGNAL SENDING METHOD AND APPARATUS, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/074483
(87) International publication number: WO 2024/159550

(57) **Abstract**

The present disclosure relates to a sidelink positioning reference signal (SL-PRS) sending method and apparatus, and a storage medium. The method may be applied to a terminal. The method comprises: receiving configuration information of a configured grant (CG), wherein the configuration information is used for indicating a CG resource for sending an SL-PRS; and sending the SL-PRS according to the configuration information, SL-PRS sending based on a CG can be reliably implemented, thereby implementing terminal-to-terminal sidelink positioning.

## Description

### TECHNICAL FIELD

The disclosure relates to the field of communication technology, and in particular to a method and an apparatus for transmitting a sidelink positioning reference signal (SL-PRS), and a storage medium.

### BACKGROUND

Positioning between terminals and over sidelink is called sidelink positioning. The sidelink positioning includes sidelink absolute positioning, sidelink relative positioning, and ranging. By measuring positioning signals namely SL-PRSs transmitted via a sidelink from a plurality of other terminals, a terminal may determine its specific location relative to the other terminals.

### SUMMARY

The disclosure provides a method and an apparatus for transmitting a SL-PRS, and a storage medium.

According to a first aspect of the disclosure, a method for transmitting an SL-PRS is provided. The method is applied to a terminal, including: receiving configuration information, in which the configuration information at least indicates a configured grant (CG) resource for transmitting the SL-PRS; and transmitting the SL-PRS based on the configuration information.

According to a second aspect of the disclosure, a method for transmitting an SL-PRS is provided. The method is applied to a base station, including: transmitting configuration information, in which the configuration information at least indicates a CG resource for transmitting the SL-PRS.

According to a third aspect of the disclosure, a terminal is provided. The terminal includes: a receiving module, configured to receive configuration information, in which the configuration information at least indicates a CG resource for transmitting a SL-PRS; and a transmitting module, configured to transmit the SL-PRS based on the configuration information.

According to a fourth aspect of the disclosure, a base station is provided. The base station includes: a transmitting module, configured to transmit configuration information, in which the configuration information at least indicates a CG resource for transmitting a SL-PRS.

According to a fifth aspect of the disclosure, a communication system is provided. The communication system including: a terminal, configured to perform the method according to the first aspect; and a base station, configured to perform the method according to the second aspect.

According to a sixth aspect of the disclosure, a communication device is provided. The communication device includes: a processor; and a memory storing processor executable instructions, in which the processor is configured to perform steps of the method according to the first aspect or perform steps of the method according to the second aspect.

According to a seventh aspect of the disclosure, a computer-readable storage medium is provided. The computer-readable storage medium stores computer program instructions, in which when the computer program instructions are executed by a processor, steps of the method according to the first aspect are performed, or steps of the method according to the second aspect are performed.

The technical solutions provided in embodiments of the disclosure may include the following beneficial effects. By receiving the configuration information and determining the CG resource for transmitting the SL-PRS based on the configuration information, and further transmitting the SL-PRS based on the CG resource configured by the configuration information, transmitting the SL-PRS may be reliably implemented based on the CG, and thus implementing sidelink positioning between terminals.

It should be understood that the above general description and the following detailed description are only illustrative and explanatory, and do not limit the disclosure.

### BRIEF DESCRIPTION OF THE DRAWINGS

The accompanying figures here are incorporated into the specification and constitute a part of the specification, showing embodiments consistent with the disclosure, and are used together with the specification to explain the principles of the disclosure.
FIG. 1 is a schematic diagram illustrating a communication system according to an illustrative embodiment.
FIG. 2 is a flowchart illustrating a method for transmitting a SL-PRS according to an illustrative embodiment.
FIG. 3 is a flowchart illustrating a method for transmitting an SL-PRS according to an illustrative embodiment.
FIG. 4 is a flowchart illustrating a method for transmitting an SL-PRS according to an illustrative embodiment.
FIG. 5 is a flowchart illustrating a method for transmitting an SL-PRS according to an illustrative embodiment.
FIG. 6 is a flowchart illustrating a method for transmitting an SL-PRS according to an illustrative embodiment.
FIG. 7 is a flowchart illustrating a method for transmitting an SL-PRS according to an illustrative embodiment.
FIG. 8 is a flowchart illustrating a method for transmitting an SL-PRS according to an illustrative embodiment.
FIG. 9 is a flowchart illustrating a method for transmitting an SL-PRS according to an illustrative embodiment.
FIG. 10 is a flowchart illustrating a method for transmitting an SL-PRS according to an illustrative embodiment.
FIG. 11 is a flowchart illustrating a method for transmitting an SL-PRS according to an illustrative embodiment.
FIG. 12 is a block diagram illustrating a terminal according to an illustrative embodiment.
FIG. 13 is a block diagram illustrating a base station according to an illustrative embodiment.
FIG. 14 is a block diagram illustrating a communication device according to an illustrative embodiment.

### DETAILED DESCRIPTION

Reference will now be made in detail to the exemplary embodiments, examples of which are illustrated in the accompanying figures. When the following description refers to the accompanying figures, the same numerals in different figures refer to the same or similar elements unless otherwise indicated. The implementations described in the following illustrative embodiments do not represent all implementations consistent with the disclosure. Rather, they are merely examples of devices and methods consistent with some aspects of the disclosure as recited in the appended claims.

In the description of the present disclosure, the term "first" and "second" are used to distinguish similar objects, and are not necessarily used to describe a specific order or sequence. In addition, unless stated otherwise, in the description with reference to the accompanying figures, the same reference numerals in different figures denote the same elements.

In the description of the disclosure, unless otherwise specified, "a plurality of" means two or more, and other quantifiers are similar; "at least one", "one or more", or similar expressions refer to any combination of these items, including a single item or a combination of a plurality of items. For example, at least one can represent any number; for another example, one or more of a, b, and c may represent: a, b, c, a-b, a-c, b-c, or a-b-c, in which a, b, and c may be singular or plural; "and/or" describes an association relationship of associated objects, indicating that three relationships may exist. For example, A and/or B may indicate: A exists alone, A and B exist simultaneously, or B exists alone, where A and B may be singular or plural.

In embodiments of the disclosure, although operations or steps are described in a specific order in the accompanying figures, this should not be understood as requiring that these operations or steps be performed in the specific order shown or in a sequential order, or that all illustrated operations or steps be performed to achieve a desired result. In the embodiments of the disclosure, these operations or steps may be performed in any order; these operations or steps may also be performed in parallel; and a part of these operations or steps may also be performed.

The implementation environment of the embodiments of the disclosure is first introduced below.

The technical solutions of the embodiments of the disclosure may be applied to various communication systems. The communication system may include one or more of a 4th generation (4G) communication system, a 5th generation (5G) communication system, and other future wireless communication systems (e.g., 6G). The communication system may also include one or more of a public land mobile network (PLMN), a device-to-device (D2D) communication system, a machine to machine (M2M) communication system, an Internet of Things (IoT) communication system, and a vehicle-to-everything (V2X) communication system.

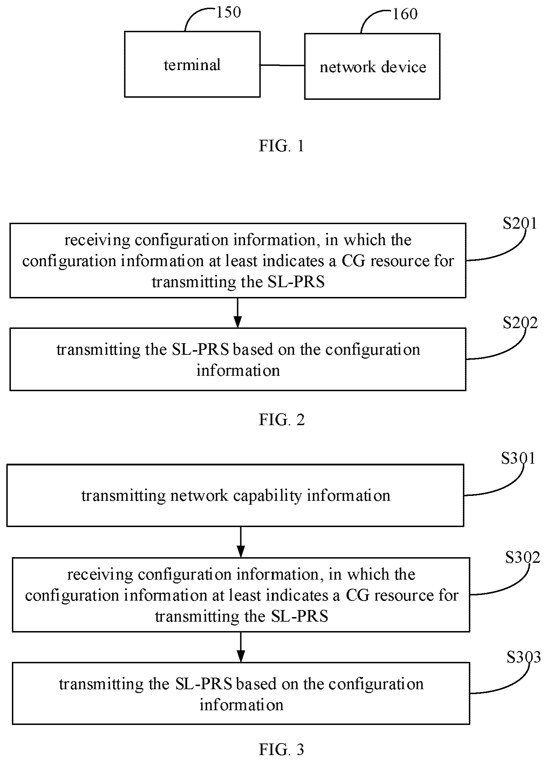

FIG. 1 is a schematic diagram illustrating a communication system according to an illustrative embodiment. As shown in FIG. 1, the communication system may include a terminal device 150 and a network device 160. The communication system may support 4G network access technologies, for example, long term evolution (LTE) access technology, or 5G network access technologies, for example, new radio access technology (New RAT), or other future wireless communication technologies. It should be noted that the numbers of network devices and terminal devices in the communication system may be one or more. The numbers shown in FIG. 1 are only adaptive examples, and the disclosure does not limit this.

The terminal device 150 in FIG. 1 may also be called user equipment (UE), subscriber unit, mobile station, station, terminal, etc. For example, the terminal device may include a smartphone, a smart wearable device, a smart speaker, a smart tablet, a wireless modem, a wireless local loop (WLL) station, a personal digital assistant (PDA), or a customer premise equipment (CPE), etc. With the development of wireless communication technologies, any device that may access the communication system, communicate with network devices of the communication system, or communicate with other objects via the communication system, or any device that enables direct communication between two or more devices may be the terminal device in the embodiments of the disclosure. For example, a terminal and a vehicle in intelligent transportation, a household device in a smart home, a power meter reading instrument in a smart grid, a voltage monitoring instrument, an environmental monitoring instrument, a video monitoring instrument in a smart security network, a cash register, etc. In the embodiments of the disclosure, the terminal device may communicate with the network device. A plurality of terminal devices may also communicate with each other. The terminal device may be statically fixed or mobile, and the disclosure does not limit this.

In some embodiments, the network device 160 in FIG. 1 may include a device for supporting access of the terminal device and providing wireless network communication functions for the terminal device. In some embodiments of the disclosure, the network device may include an access network device and/or a core network device. The access network device may be a radio access network (RAN) or an access network (AN). For example, the access network device may be an evolved Node B (eNB or eNodeB) in the LTE. The access network device may also be a next generation Node B (gNB or gNodeB) in 5G networks. The access network device may also be a next generation radio access network (NG-RAN) device in a 5G network. The access network device may also be a base station in a future evolved public land mobile network (PLMN), a broadband network gateway (BNG), an aggregation switch, or a non-3rd generation partnership project (3GPP) access device, etc. Optionally, the access network device in the embodiments of the disclosure may include various forms of base stations, for example: macro base stations, micro base stations (also called small stations), relay stations, access points, 5G base stations or future base stations, satellites, transmission and reception point (TRP), transmission point (TP), mobile switching center, and devices that perform base station functions in D2D, M2M, IoT, V2X, or other communications. The embodiments of the disclosure do not specifically limit this. For convenience of description, in the embodiments of the disclosure, devices providing wireless communication functions for the terminal devices are collectively called access network devices or base stations. The core network device may be used to perform one or more of mobility management, call control, session management, registration authentication, and charging for the terminal devices. The core network device may include one or more entities. The entity may be hardware, software divided by function, or a combination of both. It should be noted that the entity may also be called a function.

The related art is further introduced below.

In the related art, positioning based on a Uu interface (a radio interface between a UE and a base station) is called Uu positioning. Positioning methods include Bluetooth positioning, sensor positioning, carrier phase positioning, etc. The positioning based on a sidelink between UEs is called sidelink positioning, which includes sidelink absolute positioning, sidelink relative positioning, and ranging. The absolute positioning determines absolute coordinates of the UE, the relative positioning determines coordinates of the UE relative to a reference point, and the ranging determines a distance and/or an angle of the UE relative to a reference point. The ranging usually involves ranging between two UEs, but the absolute positioning and the relative positioning may involve a plurality of UEs for positioning. Further, a SL positioning method may be combined with a Uu positioning method to improve positioning accuracy. In addition, if an absolute position of a UE needs to be obtained, an absolute position of a reference UE may be obtained via the Uu positioning, then a relative position of a target UE with respect to the reference UE may be obtained via the relative positioning, and then an absolute position of the target UE may be calculated based on the absolute position of the reference UE and the relative position of the target UE.

Taking an SL-TDOA positioning method as an example, the UE may determine its specific position relative to a remote subscriber unit (RSU) by measuring positioning signals, namely SL-PRS, transmitted by a plurality of RSUs via the sidelink. If a positioning result is not converted into absolute position coordinates based on absolute position information of the RSU (e.g., GPS), then the positioning result is a relative positioning result. Otherwise, it is an absolute positioning result. The number of RSUs may be greater than or equal to 3, and an RSU is also a type of UE. The UE being positioned is the target UE, and other UEs supporting positioning of the target UE are anchor UEs, for example, RSUs. If positioning involves only two UEs, they are anchor UEs of each other. The anchor UEs have different types, for example, an anchor UE of the RSU type belongs to infrastructure and may provide positioning services by cooperating with other RSUs. For example, an ordinary UE may also serve as an anchor UE, but it is difficult to cooperate with other UEs to provide positioning services. In addition, some anchor UEs have position information such as GPS and may assist other UEs in the absolute positioning. Other anchor UEs may not have position information such as GPS.

In an embodiment of the disclosure, it is proposed that a configured grant (CG) of a base station may be used to schedule an SL-PRS to implement grant-free transmission of the SL-PRS. In this case, the network may avoid transmitting scheduling information multiple times, effectively reducing signaling overhead.

Based on the above, in an embodiment, the network device in the communication system shown in FIG. 1 may be a base station, and the terminal device may be a terminal. The base station may perform steps of the method for transmitting an SL-PRS executed by a base station side in the following embodiments. The terminal may perform steps of the method for transmitting an SL-PRS executed by a terminal side in the following embodiments. Thus, the sidelink positioning based on the configured grant is implemented.

FIG. 2 is a flowchart illustrating a method for transmitting an SL-PRS according to an illustrative embodiment. The method is applied to a terminal. As shown in FIG. 2, the method includes the following steps S201to S202.

At S201, configuration information is received, in which the configuration information at least indicates a CG resource for transmitting the SL-PRS.

In some embodiments, the configuration information may be information for indicating the CG resource for transmitting the SL-PRS. The information may also be resource indication information or configuration indication information, which is not limited by the disclosure.

Optionally, the CG resource may be configured by a base station for the terminal via the configuration information. That is, the terminal may configured with the CG resource based on the configuration information. After the CG resource is configured, the terminal may perform grant-free signal transmission during a transmission occasion of the CG resource. Alternatively, the CG resource may be preconfigured and indicated by the configuration information to be used for transmitting the SL-PRS. The CG resource may be used not only for transmitting the SL-PRS but also for transmitting other signals, for example, a low power wake up signal (LP WUS), etc., which is not limit by the disclosure. In addition, the configuration information may be used not only for configuring the CG resource but also specifically for configuring information corresponding to transmitting the SL-PRS, etc.

For example, after step S202, other terminals connected to the terminal via sidelink may implement their own positioning by receiving the SL-PRS transmitted by the terminal.

In a possible implementation, in step S201, the terminal may receive one or more pieces of configuration information, in which one piece of configuration information may be used to configure one or more CG resources. The disclosure does not specifically limit the number of pieces of configuration information or the number of CG resources.

In an example, the CG resource is a first CG resource or a second CG resource. A time-frequency resource for the first CG resource is configured by a radio resource control (RRC) signaling. Partial parameters for the second CG resource are configured by the RRC signaling, a time-frequency resource for the second CG resource is configured by downlink control information (DCI), and the DCI is also configured to activate or deactivate the second CG resource. In this case, the CG resource for transmitting the SL-PRS may be configured solely by the RRC signaling to save signaling, or may be configured and scheduled more flexibly through a combination of the RRC signaling and the DCI.

In this example, there may be only one CG resource configured by the configuration information, which may be the first CG resource or the second CG resource. Alternatively, there may be a plurality of CG resources configured by the configuration information, and the CG resource referred to in this example is any one of the plurality of CG resources. Optionally, one piece of configuration information may be carried by the RRC signaling or by both the RRC signaling and the DCI. One RRC signaling may be used to configure all or partial parameters of one or more CG resources. One piece of DCI may be used to configure other parameters of one or more CG resources, and/or to activate or deactivate one or more CG resources. Those skilled in the art may adapt these configurations based on actual requirements, and which is not limited by the disclosure. Optionally, a time-frequency resource for one second CG resource may be configured by one piece of DCI, and activation of the second CG resource may be implemented by another piece of DCI. Alternatively, the time-frequency resource may be configured and the second CG resource may be activated simultaneously by the same DCI.

In an implementation, all parameters of the first CG resource may be specifically configured by the RRC signaling without requiring the DCI for activation or deactivation. The partial parameters of the second CG resource may be configured by the RRC signaling, and other parameters of the second CG resource may be configured by the DCI. The other parameters may include, for example, the time-frequency domain resource. The DCI may also be configured to activate or deactivate the second CG resource.

In an embodiment, the first CG resource may be any resource with the time-frequency resource configured by the RRC signaling. The second CG resource may be any resource with partial parameters configured by the RRC signaling and other parameters configured by the DCI. Optionally, the first CG resource may correspond to, for example, a configured grant type 1, and the second CG resource may correspond to, for example, a configured grant type 2. Alternatively, the first CG resource may be, for example, a semi-persistently scheduled CG resource, and the second CG resource may be, for example, a dynamically scheduled CG resource. The name of the resource does not necessarily limit the resource itself. For example, the first CG resource may also be described as a "first type CG resource", and the second CG resource may also be described as a "second type CG resource".

In another example, the configuration information indicates the plurality of CG resources for transmitting the SL-PRS. The plurality of CG resources includes at least one first CG resource and/or at least one second CG resource. In this case, the configuration information may indicate the plurality of CG resources for transmitting the SL-PRS, making transmitting of the SL-PRS by the terminal more flexible.

For example, the base station may configure the plurality of CG resources for the terminal for transmitting the SL-PRS. The plurality of CG resources may include first CG resources and/or second CG resources. That is, the plurality of CG resources may all be the first CG resources, or may all be the second CG resources, or may partially be the first CG resources and partially be the second CG resources. Correspondingly, if the base station configures the plurality of CG resources for transmitting the SL-PRS, each CG resource may be set as the configured grant type 1 or the configured grant type 2.

In an example, the configuration information includes a period of the CG resource. A unit of the period is one of: second, millisecond, a number of slots (slot), a number of symbols (symbol), or a number of subframes (subframe).

In addition, specific values of seconds, milliseconds, the number of slots, the number of symbols, or the number of subframes are not limited by the disclosure. The base station may configure the period based on scheduling requirements and capabilities of the terminal.

In an example, the configuration information includes a time offset. The time offset represents an offset of a start time of the CG resource relative to a reference time. Optionally, the time offset may indicate a start time offset of the CG resource relative to the reference time. A unit of the time offset may be one of second, millisecond, a number of slots (slot), a number of symbols (symbol), or a number of subframes (subframe).

In an example, the configuration information includes a reference time. The reference time is configured to determine the start time of the CG resource. In this case, the terminal may determine the start time of the CG resource more accurately based on the configuration information, thus transmit the SL-PRS on the CG resource more reliably.

In a possible implementation, the reference time is represented by a reference logical slot. If the configuration information includes the parameter, the terminal may use a first logical slot after a start time corresponding to a most recent system frame number (SFN) before receiving the configuration information as the reference logical slot. The first logical slot may be a first logical slot of a resource pool associated with the CG resource. If the parameter is not included, an SFN corresponding to the reference time may be 0.

In an example, the configuration information includes at least one of: a resource pool identifier (ID); a start sub-channel index; an SL sub-channel size; a comb size of the SL-PRS; a comb offset of the SL-PRS; a number of orthogonal frequency division multiplexing (OFDM) symbols occupied by the SL-PRS; a start OFDM symbol offset of the SL-PRS; one or more SL-PRS sequence IDs; information indicating whether to perform SL-PRS sequence hopping; information indicating whether to perform SL-PRS frequency hopping; a number of ports; a port index; a number of repetitions for transmitting the SL-PRS; an index indication of the CG resource; an SL logical channel ID associated with the CG resource; a transport layer address associated with the CG resource; or a sidelink positioning protocol (SLPP) session ID associated with the CG resource. Optionally, the configuration information may also include a number of SL sub-channels. In some possible implementations, the configuration information may include only any one of the SL sub-channel size and the number of SL sub-channels. In other possible implementations, the configuration information may include all the above information. Those skilled in the art may configure this based on actual requirements, and the disclosure does not limit this. In this case, the configuration information may not only indicate the configuration information of the CG resource but may also specifically configure resource occupation for the terminal to transmit the SL-PRS, thus more reliably implementing grant-free SL-PRS transmitting based on the CG.

In some embodiments, SL frequency domain resources are divided on a sub-channel basis. Available SL frequency domain resources may be determined based on the start sub-channel index and the SL sub-channel size. The comb size may be used to determine a number of SL-PRSs that may be multiplexed in the frequency domain. Frequency domain multiplexing may be implemented through a frequency domain offset. The comb offset may be configured to determine the frequency domain offset of the SL-PRS. In addition, the number of OFDM symbols occupied by the SL-PRS and the start OFDM symbol offset of the SL-PRS may be configured to determine SL time domain resources. The SL-PRS sequence ID may be configured to determine a code sequence used by the SL-PRS. In other embodiments, the information indicating whether to perform the SL-PRS sequence hopping may be specifically configured to determine whether code sequences used by SL-PRSs transmitted at different times are changed to different code sequences based on a certain rule. The information indicating whether to perform the SL-PRS frequency hopping may be configured to determine whether frequency domain resources used by the SL-PRSs transmitted at different times are changed to different frequency domain resources based on the certain rule. In additionally, the number of ports and the port index may be configured to determine antenna ports used to transmit the SL-PRS. In some embodiments, the terminal may be configured with the plurality of CG resources, and each CG resource may be identified by an index indication of the CG resource. Optionally, the SL logical channel ID associated with the CG resource may be applicable to a scheme of carrying the SL-PRS using a side link-unlicensed (SL-U) method.

In addition, in the above optional embodiments, since the configuration information may be used to configure the plurality of CG resources, correspondingly, the configuration information may include a period, a time offset, or a reference time for each CG resource. Similarly, the configuration information may be used to configure parameters for transmitting one SL-PRS, part of the SL-PRSs, or all SL-PRSs in each CG resource of the plurality of CG resources.

In an example, the configuration information does not include at least one of: a number of hybrid automatic repeat-request (HARQ) processes; an HARQ process offset; a maximum number of transmissions; or a slot offset between a physical sidelink feedback channel (PSFCH) and a physical uplink control channel (PUCCH). For example, the configuration information may not carry all the above information or may carry only one of them. Those skilled in the art may configure this based on actual requirements, and the disclosure does not limit this. In this case, since the SL-PRS is not data transmission and does not require retransmission or ACK (acknowledge character) feedback, the HARQ is not functional. Thus, the configuration information may exclude the above parameters to save resources occupied by transmitting the data.

In another example, the configuration information includes a configuration sequence corresponding to an SL-PRS sequence. The configuration sequence includes configuration parameters respectively corresponding to a plurality of SL-PRSs in the SL-PRS sequence. Configuration parameters corresponding to each SL-PRS includes at least one of: a port index, a number of repetitions for transmitting the SL-PRS, a start OFDM symbol offset, or a comb offset. In this case, each SL-PRS in the SL-PRS sequence may be configured for each SL-PRS sequence, further ensuring reliability of the SL-PRS transmitting.

At S202, the SL-PRS is transmitted based on the configuration information.

For example, the terminal may specifically transmit the SL-PRS on the CG resource indicated by the configuration information based on resource occupation of the SL-PRS indicated by the configuration information.

At step S202, a plurality of SL-PRSs may be transmitted, and a time-frequency resource occupied by transmitting each SL-PRS may be configured by the configuration information. Optionally, the plurality of SL-PRSs may form one or more SL-PRS sequences. The base station may perform resource configuration for each SL-PRS sequence via the configuration information. For example, each SL-PRS in each SL-PRS sequence may be configured with one or more parameters such as the port index, the number of repetitions for transmitting the SL-PRS, the start OFDM symbol offset, and the comb offset.

In some embodiments, step S202 may be specifically performed based on the period in the configuration information.

The period may instruct the terminal to periodically transmit the SL-PRS on the time-frequency resources corresponding to the CG resource based on the period until the CG resource is deconfigured or deactivated. In this case, the terminal may transmit the SL-PRS based on the period, enabling more reliable the base station scheduling of the SL-PRS transmitted by the terminal. Optionally, if the configuration information indicates a plurality of CG resources for transmitting the SL-PRSs, the configuration information may include a period for each CG resource.

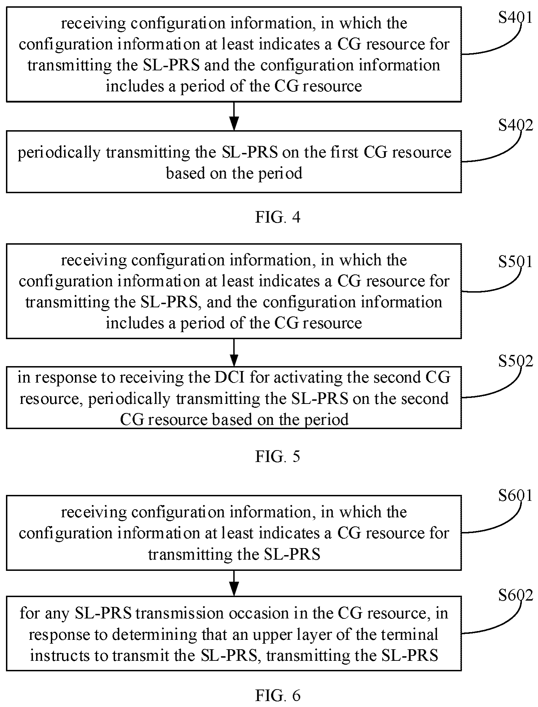

Specifically, when the configuration information includes a period of the CG resource, step S202 may include step S402 shown in FIG. 4 and/or step S502 shown in FIG. 5. For a detailed description of step S402, refer to the embodiment corresponding to FIG. 4. For a detailed description of step S502, refer to the embodiment corresponding to FIG. 5.

In some embodiments, in to the case that step S202 includes step S402 and step S502, and the configuration information indicates the plurality of CG resources including the first CG resource and the second CG resource, the terminal may perform step S402 or step S502 for each CG resource. For example, if the terminal receives one RRC signaling indicating time-frequency resources of two first CG resources and partial parameters of one second CG resource, for the two first CG resources, the terminal may respectively perform step S2021 to periodically transmit the SL-PRS on the two first CG resources based on the respective corresponding periods. For the one second CG resource, after receiving the DCI for activating the second CG resource, the terminal may start periodically transmitting the SL-PRS on the second CG resource based on a period of the second CG resource.

In an example, the method may further include at least one of the following two steps: in response to determining that the first CG resource is deconfigured, stopping transmitting the SL-PRS; or in response to receiving the DCI for deactivating the second CG resource, stopping transmitting the SL-PRS.

In this case, stopping transmitting the SL-PRS may refer to stopping transmitting the SL-PRS on the corresponding CG resource.

In this case, the terminal may flexibly stop transmitting the SL-PRS during the process of transmitting the SL-PRS, more reliably scheduling transmitting of the SL-PRS.

For example, in the case that there is only one CG resource indicated by the configuration information and the terminal has started transmitting the SL-PRS on the CG resource, if the CG resource is the first CG resource, whether to stop transmitting the SL-PRS may be determined based on whether the first CG resource is deconfigured. If the CG resource is the second CG resource, whether to stop transmitting the SL-PRS may be determined based on whether the DCI for deactivating the second CG resource is received.

In another example, in the case that the terminal transmits the SL-PRSs on the plurality of first CG resources, if the terminal determines that one of the first CG resources is deconfigured, the terminal may stop transmitting the SL-PRS on the deconfigured first CG resource and continue transmitting the SL-PRSs on other first CG resources. Similarly, in the case that the terminal transmits the SL-PRSs on the plurality of second CG resources, if the terminal receives the DCI for deactivating one of the second CG resources, the terminal may stop transmitting the SL-PRS on the deactivated second CG resource and continue transmitting the SL-PRS on other second CG resources. The case where the terminal transmits the SL-PRS on one or more first CG resources and one or more second CG resources is similar and will not be repeated.

In an example, after step S202, the method may further include the following step: in response to receiving new configuration information for reconfiguring the first CG resource, transmitting the SL-PRS based on a period corresponding to the new configuration information. In this case, by re-transmitting the new configuration information, the first CG resource may be reconfigured, enabling more flexible scheduling of the terminal.

The new configuration information may be configuration information received by the terminal after configuration of the first CG resource and closest to a current time. It may be called "new configuration information" or "latest configuration information", which is not limited by the disclosure.

Further, the period of the first CG resource included in the new configuration information may be the same as or different from the period corresponding to the first CG resource included in old configuration information. In addition, the new configuration information may be transmitted by the base station. After receiving the new configuration information, the terminal may reconfigure the first CG resource based on the new configuration information. After configuration is completed, the terminal may transmit the SL-PRS based on the period corresponding to the new configuration information. Further, transmitting the SL-PRS by the terminal based on the period corresponding to the new configuration information may be instructed by the new configuration information or may be executed by the terminal based on a protocol in response to determining that the first CG resource is reconfigured.

Optionally, the new configuration information may be configured to reconfigure any one or more first CG resources of the plurality of first CG resources. For any first CG resource, if the terminal determines that the new configuration information reconfigures the first CG resource, the terminal may transmit the SL-PRS based on the reconfigured period. If the terminal determines that the new configuration information does not reconfigure the first CG resource, the terminal may transmit the SL-PRS based on the previous period.

In an example, step S202 may include the following step: for any SL-PRS transmission occasion in the CG resource, in response to determining that an upper layer of the terminal instructs to transmit the SL-PRS, transmitting the SL-PRS.

For details of the step, refer to the detailed description corresponding to step S602 shown in FIG. 6, which will not be repeated here.

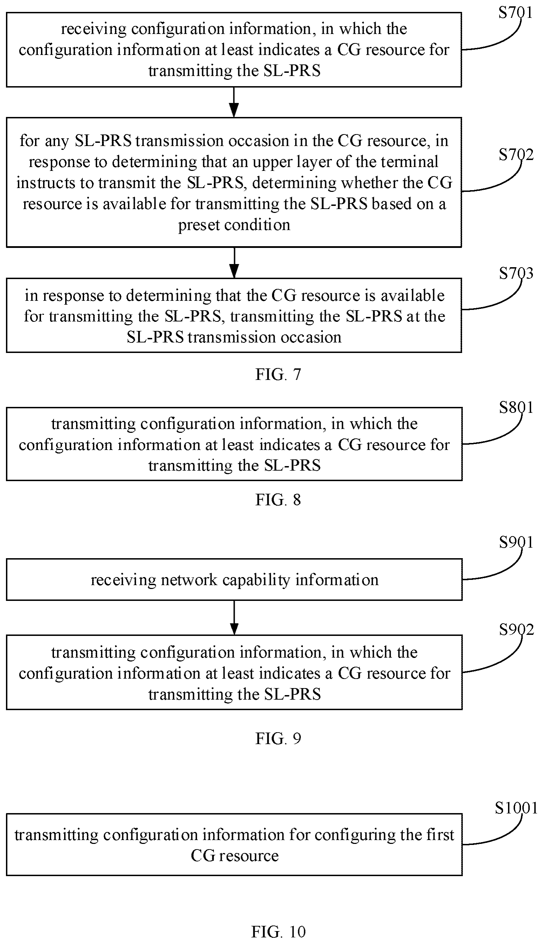

Optionally, before transmitting the SL-PRS, it may also be determined whether the CG resource is available for transmitting the SL-PRS based on a preset condition. For details of the step, refer to the detailed description corresponding to step S702 shown in FIG. 7.

In an example, before step S201, the method may further include the following step: transmitting network capability information.

For details of the step, refer to the detailed description corresponding to step S301 shown in FIG. 3.

In some embodiments, the configuration information received in step S201 may be configured based on the network capability information transmitted in the step.

In an embodiment of the disclosure, by receiving the configuration information and determining the CG resource for transmitting the SL-PRS based on the configuration information, and further transmitting the SL-PRS based on the CG resource configured by the configuration information, grant-free transmission of the SL-PRS may be reliably implemented based on the CG, and thus implement sidelink positioning between terminals.

Without conflict, the embodiments of the disclosure may be combined with embodiments or implementations and various optional solutions related to other methods for transmitting an SL-PRS, which will not be repeated here.

FIG. 3 is a flow chart illustrating a method for transmitting an SL-PRS according to an illustrative embodiment. The method is applied to a terminal. As shown in FIG. 3, the method includes the following steps S301 to S303.

At S301: network capability information is transmitted.

In some embodiments, configuration information received by the terminal in a subsequent step of step S301 may be configured by a network device, for example, a base station, based on the network capability information.

In an example, the network capability information indicates at least one of: a maximum number of CG resources supported by the terminal; a maximum number of first CG resources supported by the terminal; a maximum number of second CG resources supported by the terminal; or a maximum number of SL-PRS ports supported by the terminal within one SL-PRS resource.

Optionally, an SL-PRS resource may be any time-frequency resource used by the terminal to transmit the SL-PRS, for example, a CG resource, a dynamically scheduled resource, or a resource selected by the terminal, which is not limited by the disclosure.

In some embodiments, when the CG resource does not include a first CG resource or a second CG resource, the network capability information may specifically indicate at least one of: a maximum number of CG resources supported by the terminal; or a maximum number of SL-PRS ports supported by the terminal within one SL-PRS resource.

In some implementations, the network capability information may only indicate the maximum number of CG resources supported by the terminal. For example, the base station may configure the configuration information for the terminal based on the maximum number of CG resources, and a number of CG resources indicated by the configuration information is less than the maximum number.

In other implementations, the network capability information may only indicate the maximum number of SL-PRS ports supported by the terminal within one SL-PRS resource. For example, the base station may configure the SL-PRS ports for the CG resource indicated by the configuration information based on the maximum number of SL-PRS ports, so that a number of SL-PRS ports of the CG resource is less than or equal to the maximum number of SL-PRS ports.

In other implementations, the network capability information may indicate the maximum number of CG resources supported by the terminal and the maximum number of first CG resources supported by the terminal. For example, the base station may configure the configuration information for the terminal based on the capability information, so that the number of CG resources indicated by the configuration information is less than or equal to the maximum number of CG resources supported by the terminal, and a number of first CG resources among the CG resources is less than or equal to the maximum number of first CG resources supported by the terminal. Optionally, other CG resources among the CG resources excluding the first CG resources may all be second CG resources.

It may be understood that the above implementations are only illustrative introductions to information that may be included in the network capability information. To save space, the embodiments of the disclosure do not introduce every combination of the plurality of pieces of information described above. Those skilled in the art may select specific content included in the network capability information based on actual requirements.

At S302, the configuration information is received, in which the configuration information at least indicates a CG resource for transmitting the SL-PRS.

At S303: the SL-PRS is transmitted based on the configuration information.

For details of step S302 and step S303, refer to the detailed description of step S201 and step S202 shown in FIG. 2, which will not be repeated here.

In the embodiments of the disclosure, by transmitting the network capability information, the base station may configure the configuration information for the terminal based on the network capability information, so that the terminal determines the CG resource for transmitting the SL-PRS based on the configuration information, and causes the terminal to transmit the SL-PRS based on the CG resource configured by the configuration information. As such, grant-free transmission of the SL-PRS based on the CG based on network capability of the terminal is reliably implemented, and thus sidelink positioning between terminals is implemented.

Without conflict, the embodiments of the disclosure may be combined with embodiments or implementations and various optional solutions related to other methods for transmitting an SL-PRS, which is not be repeated here.

FIG. 4 is a flow chart illustrating a method for transmitting an SL-PRS according to an illustrative embodiment. The method is applied to a terminal. As shown in FIG. 4, the method includes the following steps S401 to S402.

At S401: configuration information is received, in which the configuration information at least indicates a CG resource for transmitting the SL-PRS, and the configuration information includes a period of the CG resource.

For details of step S401, refer to the detailed description of step S201 in the embodiment corresponding to FIG. 2, which will not be repeated here.

At S402: the SL-PRS is periodically transmitted on the first CG resource based on the period.

Optionally, step S402 may be performed after the terminal determines that the CG resource is a first CG resource. For example, after receiving a RRC signaling for configuring the first CG resource and completing configuration, the terminal may directly start periodically transmitting the SL-PRS based on the period indicated by the RRC signaling.

Alternatively, in the case that the configuration information indicates a plurality of CG resources including one or more first CG resources, the terminal may perform step S402 after receiving the configuration information and completing configuration of any first CG resource based on the configuration information. For example, the terminal may perform step S402 after determining that configuration of the first CG resource is completed based on a protocol.

For example, for the first CG resource, after receiving the configuration information (e.g., the RRC signaling for configuring the first CG resource), the terminal may periodically transmit the SL-PRS based on the period corresponding to the first CG resource carried in the configuration information, that is, the RRC signaling. For another example, if the configuration information indicates a plurality of first CG resources for transmitting the SL-PRS, in step S402, the terminal may periodically transmit the SL-PRS based on the period corresponding to each first CG resource.

In an example, before step S401, the method may further include: transmitting network capability information.

For details of this step, refer to the detailed description corresponding to step S301 shown in FIG. 3.

In some embodiments, the configuration information received in step S201 may be configured based on the network capability information transmitted in this step.

In some embodiments, the method may further include: in response to determining that the first CG resource is deconfigured, stopping transmitting the SL-PRS.

Specifically, the first CG resource may be any one of the plurality of first CG resources. Stopping transmitting the SL-PRS may specifically refer to stopping transmitting the SL-PRS on the currently deconfigured first CG resource, while continuing to periodically transmit the SL-PRS on other first CG resources that are not deconfigured.

The base station may transmit a first signaling instructing the terminal to deconfigure the first CG resource. The first CG resource may be any one or more first CG resources configured by the base station for the terminal. The first signaling may be, for example, a RRC signaling, which may also carry partial or complete new configuration information. After receiving the first signaling, the terminal may deconfigure the first CG resource based on the first signaling and, based on a protocol, stop transmitting the SL-PRS on the deconfigured first CG resource. Further, the terminal stopping transmitting the SL-PRS may be instructed by the first signaling or may be executed by the terminal based on a protocol in response to determining that the first CG resource is deconfigured.

In other embodiments, after step S402, the method may further include: in response to receiving new configuration information for reconfiguring the first CG resource, transmitting the SL-PRSs based on the period corresponding to the new configuration information.

For details of this step, refer to the relevant detailed description in the embodiment corresponding to FIG. 2, which will not be repeated here.

In addition, step S402 may be combined with step S502 shown in FIG. 5 to ensure that in the case that the plurality of CG resources indicated by the configuration information include the first CG resource and a second CG resource, the SL-PRS may be transmitted based on the first CG resource and the second CG resource. For details of step S502, refer to the detailed description in the embodiment corresponding to FIG. 5.

In the embodiments of the disclosure, by receiving the configuration information and determining the CG resource for transmitting the SL-PRS and the period corresponding to the first CG resource based on the configuration information, and further periodically transmitting the SL-PRS based on the CG resource configured by the configuration information and the period corresponding to the first CG resource, grant-free transmission of the SL-PRS based on the CG may be reliably implemented, and thus sidelink positioning between terminals is implemented.

Without conflict, the embodiments of the disclosure may be combined with embodiments or implementations and various optional solutions related to other methods for transmitting an SL-PRS, which is not be repeated here.

FIG. 5 is a flow chart illustrating a method for transmitting an SL-PRS according to an illustrative embodiment. The method is applied to a terminal. As shown in FIG. 5, the method includes the following steps S501 to S502.

At S501: configuration information is received, in which the configuration information at least indicates a CG resource for transmitting the SL-PRS, and the configuration information includes a period of the CG resource.

For details of step S501, refer to the detailed description of step S201 in the embodiment corresponding to FIG. 2, which will not be repeated here.

At S502: in response to receiving the DCI for activating a second CG resource, the SL-PRS is periodically transmitted on the second CG resource based on the period.

Optionally, step S502 may be performed after the terminal determines that the CG resource is the second CG resource, or after the terminal determines that the configuration information indicates a plurality of CG resources including one or more second CG resources. For example, after receiving a RRC signaling for configuring partial parameters of the second CG resource, the terminal may not transmit the SL-PRS immediately. After receiving the DCI for activating the second CG resource, the terminal may start periodically transmitting the SL-PRS based on the period indicated in the RRC signaling or the DCI. For another example, if the configuration information indicates a plurality of second CG resources for transmitting the SL-PRS, in step S502, the terminal may periodically transmit the SL-PRS on each second CG resource based on its corresponding period after activation.

In an example, before step S501, the method may further include: transmitting network capability information.

For details of this step, refer to the detailed description corresponding to step S301 shown in FIG. 3.

In some embodiments, the configuration information received in step S501 may be configured based on the network capability information transmitted in the step.

In some embodiments, the method may further include: in response to receiving DCI for deactivating the second CG resource, stopping transmitting the SL-PRS.

For example, the base station may transmit the DCI instructing the terminal to deactivate the second CG resource. The second CG resource may be any one or more second CG resources previously configured and activated by the base station for the terminal. The terminal stopping transmitting the SL-PRS may be instructed by the DCI. Alternatively, after receiving the DCI, the terminal may first deactivate the second CG resource corresponding to the DCI and then stop transmitting the SL-PRS based on a protocol after deactivation.

Optionally, in response to the terminal transmitting the SL-PRS on the plurality of second CG resources, if the terminal receives the DCI for deactivating one of the second CG resources, the terminal may stop transmitting the SL-PRS on the deactivated second CG resource and continue transmitting the SL-PRS on other second CG resources.

In an example, in step S502, a plurality of SL-PRSs may be transmitted based on a plurality of periods. A time-frequency resource occupied by transmitting each SL-PRS may be configured by the configuration information. Further, the plurality of SL-PRSs may form one or more SL-PRS sequences. Resources may be configured for each SL-PRS sequence via the configuration information. Specifically, each SL-PRS in each SL-PRS sequence may be configured with one or more parameters such as a port index, a number of repetitions for transmitting the SL-PRS, a start OFDM symbol offset, or a comb offset.

In addition, step S502 may be combined with step S402 shown in FIG. 4 to ensure that in the case that the CG resource indicated by the configuration information including a first CG resource and the second CG resource, the terminal may transmit the SL-PRS on the first CG resource and the second CG resource respectively. For details of step S402, refer to the detailed description in the embodiment corresponding to FIG. 4.

In the embodiments of the disclosure, the configuration information is received and the CG resource for transmitting the SL-PRS and the period corresponding to the second CG resource are determined based on the configuration information, and the SL-PRS is periodically transmitted based on the CG resource configured by the configuration information and the period corresponding to the second CG resource. As such, grant-free transmission of the SL-PRS based on the CG may be reliably implemented, and thus sidelink positioning between terminals is implemented.

Without conflict, the embodiments of the disclosure may be combined with embodiments or implementations and various optional solutions related to other methods for transmitting an SL-PRS, which is not be repeated here.

FIG. 6 is a flow chart illustrating a method for transmitting an SL-PRS according to an illustrative embodiment. The method is applied to a terminal. As shown in FIG. 6, the method includes the following steps S601 and S602.

At S601: configuration information is received, in which the configuration information at least indicates a CG resource for transmitting the SL-PRS.

For details of step S601, refer to the detailed description of step S201 in the embodiment corresponding to FIG. 2, which will not be repeated here.

At S602: for any SL-PRS transmission occasion in the CG resource, in response to determining that an upper layer of the terminal instructs to transmit the SL-PRS, the SL-PRS is transmitted.

In some embodiments, for any CG resource, it may include at least one transmission occasion for transmitting the SL-PRS, that is, an SL-PRS transmission occasion. At each transmission occasion, the upper layer of the terminal may determine whether to transmit the SL-PRS and instruct to transmit the SL-PRS when determining to transmit the SL-PRS. The upper layer of the terminal may be higher than a media access control (MAC) layer or a physical layer, for example, a network layer, a transport layer, or an application layer, etc.

In a possible implementation, if the terminal determines that there is an SL-PRS transmitting instruction from the upper layer of the terminal and the instruction has not been canceled, after a transmission occasion corresponding to a CG resource arrives, the terminal may transmit the SL-PRS via the CG resource.

In another possible implementation, after transmitting the SL-PRS, the terminal cancels the SL-PRS transmitting instruction. Alternatively, after transmitting the SL-PRS, if the SL-PRS is transmitted once, the terminal cancels the SL-PRS transmitting instruction. If the SL-PRS is transmitted periodically or semi-persistently, the terminal cancels the SL-PRS transmitting instruction when the upper layer of the terminal instructs to cancel transmitting.

In an example, before step S601, the method may further include: transmitting network capability information.

For details of this step, refer to the detailed description corresponding to step S301 shown in FIG. 3.

In some embodiments, the configuration information received in step S601 may be configured based on the network capability information transmitted in this step.

In an example, when the upper layer of the terminal instructs to transmit the SL-PRS, the upper layer of the terminal further indicates at least one of: an SL-PRS sequence ID; a bandwidth requirement; a latency requirement; or a transmitting period of the SL-PRS.

In some embodiments, the bandwidth requirement may indicate a minimum bandwidth threshold for transmitting the SL-PRS or may further indicate a bandwidth range for transmitting the SL-PRS. For example, the upper layer of the terminal may indicate the minimum bandwidth threshold or the bandwidth range. In some examples, the latency requirement may indicate a maximum latency for transmitting the SL-PRS or may also further indicate a latency range for transmitting the SL-PRS. For example, the upper layer of the terminal may indicate the maximum latency or the latency range, which is not specifically limited by the disclosure.

In an example, step S602 may include: for any SL-PRS transmission occasion in the CG resource, in response to determining that the upper layer of the terminal instructs to transmit the SL-PRS, determining whether the CG resource is available for transmitting the SL-PRS based on a preset condition; and in response to determining that the CG resource is available for transmitting the SL-PRS, transmitting the SL-PRS at the SL-PRS transmission occasion.

For details of this step, refer to the detailed description of step S702 and step S703 shown in FIG. 7, which will not be repeated here.

Optionally, the upper layer of the terminal may determine what information to indicate based on the preset condition. For example, if the preset condition only includes that one or more SL-PRS sequence IDs corresponding to the CG resource include an SL-PRS sequence ID indicated by the upper layer of the terminal, the upper layer of the terminal may only indicate the SL-PRS sequence ID. Alternatively, the preset condition may be determined based on information indicated by the upper layer of the terminal. For example, if the upper layer of the terminal only indicates the transmitting period of the SL-PRS, the preset condition may only include that the period of the CG resource satisfies a transmitting period requirement corresponding to the transmitting period. Alternatively, what information the upper layer of the terminal indicates may be determined by the terminal, and the preset condition may be pre-agreed based on a protocol, with no correlation between the two, which is not limit by the disclosure.

It should be understood that time-frequency resources used for transmitting the SL-PRS in step S602 may be configured by the configuration information. Step S602 may be executed a plurality of times at a plurality of transmission occasions to transmit a plurality of SL-PRSs. Further, the plurality of SL-PRSs may form one or more SL-PRS sequences. Resources may be configured for each SL-PRS sequence via the configuration information. Specifically, each SL-PRS in each SL-PRS sequence may be configured with one or more parameters such as a port index, a number of repetitions for transmitting the SL-PRS, a start OFDM symbol offset, or a comb offset.

In the embodiments of the disclosure, by receiving the configuration information and determining the CG resource for transmitting the SL-PRS based on the configuration information, and determining whether to transmit the SL-PRS at each transmission occasion in the CG resource by the upper layer of the terminal, transmitting of the SL-PRS based on the CG may be reliably implemented, and thus sidelink positioning between terminals is implemented.

Without conflict, the embodiments of the disclosure may be combined with embodiments or implementations and various optional solutions related to other methods for transmitting an SL-PRS, which is not repeated here.

FIG. 7 is a flow chart illustrating a method for transmitting an SL-PRS according to an illustrative embodiment. The method is applied to a terminal. As shown in FIG. 7, the method includes the following steps S701 to S703.

At S701: configuration information is received, in which the configuration information at least indicates a CG resource for transmitting the SL-PRS.

For details of step S701, refer to the detailed description of step S201 in the embodiment corresponding to FIG. 2, which will not be repeated here.

At S702: for any SL-PRS transmission occasion in the CG resource, in response to determining that an upper layer of the terminal instructs to transmit the SL-PRS, it is determined whether the CG resource is available for transmitting the SL-PRS based on a preset condition.

For example, for any CG resource, it may include at least one transmission occasion for transmitting the SL-PRS, that is, an SL-PRS transmission occasion. At each transmission occasion, the upper layer of the terminal may determine whether to transmit the SL-PRS and instruct to transmit the SL-PRS when determining to transmit the SL-PRS. The upper layer of the terminal may be higher than a MAC layer or a physical layer, for example, may be a network layer, a transport layer, or an application layer, etc.

In an example, the preset condition includes at least one of: one or more SL-PRS sequence IDs corresponding to the CG resource including an SL-PRS sequence ID indicated by the upper layer of the terminal; an SL-PRS transmitting bandwidth corresponding to the CG resource satisfying a bandwidth requirement; a transmission occasion corresponding to the CG resource satisfying a latency requirement; or a period of the CG resource satisfying a transmitting period requirement corresponding to the transmitting period. For example, the period of the CG resource satisfying the transmitting period requirement corresponding to the transmitting period may specifically mean that the period of the CG resource is an integer multiple of a transmitting period of the SL-PRS.

In an implementation, when the upper layer of the terminal instructs to transmit the SL-PRS, the upper layer of the terminal also indicates at least one of: the SL-PRS sequence ID; the bandwidth requirement; the latency requirement; or a transmitting period of the SL-PRS. For example, the SL-PRS sequence ID, the bandwidth requirement, the latency requirement, and the transmitting period of the SL-PRS involved in the above preset condition may be indicated by the upper layer of the terminal. In addition, the one or more SL-PRS sequence IDs corresponding to the CG resource, the SL-PRS transmitting bandwidth corresponding to the CG resource, the transmission occasion corresponding to the CG resource, and the period of the CG resource may be determined based on the configuration information. In this case, the above information is indicated by the upper layer of the terminal, so that the terminal may more accurately determine whether the CG resource is available for transmitting the SL-PRS, ensuring reliability of transmitting the SL-PRS.

In an embodiment, determining whether the CG resource is available for transmitting the SL-PRS based on the preset condition may specifically include: determining that the CG resource is available for transmitting the SL-PRS in response to determining that all conditions in the preset condition are satisfied.

Optionally, the upper layer of the terminal may determine what information to indicate based on the preset condition. For example, if the preset condition only includes that one or more SL-PRS sequence IDs corresponding to the CG resource include the SL-PRS sequence ID indicated by the upper layer of the terminal, the upper layer of the terminal may only indicate the SL-PRS sequence ID. Alternatively, the preset condition may be determined based on information indicated by the upper layer of the terminal. For example, if the upper layer of the terminal only indicates the transmitting period of the SL-PRS, the preset condition may only include that the period of the CG resource satisfies a transmitting period requirement corresponding to the transmitting period. Alternatively, what information the upper layer of the terminal indicates may be determined by the terminal, and the preset condition may be pre-agreed based on a protocol, with no correlation between the two, which is not limited by the disclosure.

At S703: in response to determining that the CG resource is available for transmitting the SL-PRS, the SL-PRS is transmitted at the SL-PRS transmission occasion.

In a possible implementation, if the terminal determines that there is an SL-PRS transmitting instruction from the upper layer of the terminal and the instruction has not been canceled, after a transmission occasion corresponding to a CG resource arrives, if the CG resource is available for transmitting the SL-PRS, the terminal may transmit the SL-PRS via the CG resource. If the CG resource is not available for transmitting the SL-PRS, the terminal may not transmit the SL-PRS on the CG resource even if the terminal determines that there is an SL-PRS transmitting instruction from the upper layer of the terminal.

In another possible implementation, after transmitting the SL-PRS, the terminal cancels the SL-PRS transmitting instruction. Alternatively, after transmitting the SL-PRS, if the SL-PRS is transmitted once, the terminal cancels the SL-PRS transmitting instruction. If the SL-PRS is transmitted periodically or semi-persistently, the terminal cancels the SL-PRS transmitting instruction when the upper layer of the terminal instructs to cancel transmitting.

In an example, before step S701, the method may further include: transmitting network capability information.

For details of this step, refer to the detailed description corresponding to step S301 shown in FIG. 3.

In some embodiments, the configuration information received in step S701 may be configured based on the network capability information transmitted in this step.

It should be understood that a time-frequency domain resource occupied by transmitting the SL-PRS in step S703 may be configured by the configuration information. Step S702 and step S703 may be executed a plurality of times at a plurality of transmission occasions to transmit a plurality of SL-PRSs. Further, the plurality of SL-PRSs may form one or more SL-PRS sequences. Resources may be configured for each SL-PRS sequence via the configuration information. Specifically, each SL-PRS in each SL-PRS sequence may be configured with one or more parameters such as a port index, a number of repetitions for transmitting the SL-PRS, a start OFDM symbol offset, or a comb offset.

In the embodiments of the disclosure, the configuration information is received and the CG resource for transmitting the SL-PRS is determined based on the configuration information, and whether to transmit the SL-PRS at each transmission occasion in the CG resource is determined by the upper layer of the terminal based on the preset condition, grant-free transmission of the SL-PRS based on the CG may be reliably implemented, and thus sidelink positioning between terminals is implemented.

Without conflict, the embodiments of the disclosure may be combined with embodiments or implementations and various optional solutions related to other methods for transmitting an SL-PRS, which is not be repeated here.

FIG. 8 is a flowchart illustrating a method for transmitting an SL-PRS according to an illustrative embodiment. The method is applied to a base station. As shown in FIG. 8, the method includes the following steps S801.

At S801, configuration information is transmitted, in which the configuration information at least indicates a CG resource for transmitting the SL-PRS.

In an embodiment, the terminal may transmit the SL-PRS based on the configuration information, enabling other terminals communicating with the terminal via sidelink to receive the SL-PRS and implement the positioning of themselves based on the SL-PRS.

In some embodiments, the configuration information may be information for indicating the CG resource for transmitting the SL-PRS. The information may also be resource indication information or configuration indication information, which is not limited by the disclosure.

Optionally, the CG resource may be configured by the base station for the terminal via the configuration information. That is, the terminal may configure the CG resource based on the configuration information. After configuring the CG resource, the terminal may perform grant-free signal transmission during a transmission occasion of the CG resource. Alternatively, the CG resource may be preconfigured and indicated by the configuration information for transmitting the SL-PRS. The CG resource may be used not only for transmitting the SL-PRS but also for transmitting other signals, for example, an LP WUS, etc., which is not limited by the disclosure. In addition, the configuration information may be used not only for configuring the CG resource but also specifically for configuring information corresponding to transmitting the SL-PRS, etc.

In additionally, the base station may transmit one or more pieces of configuration information for one terminal, in which one piece of configuration information may be used to configure one or more CG resources. The disclosure does not specifically limit the number of pieces of configuration information or the number of CG resources.

In an example, the CG resource is a first CG resource or a second CG resource. A time-frequency resource for the first CG resource is configured by RRC signaling. Partial parameters for the second CG resource are configured by the RRC signaling, a time-frequency resource for the second CG resource is configured by DCI, and the DCI is also configured to activate or deactivate the second CG resource. In this case, the CG resource for transmitting the SL-PRS may be configured solely by the RRC signaling to save signaling, or may be configured and scheduled more flexibly through a combination of the RRC signaling and the DCI.

In the example, the configuration information may configure only one CG resource, which may be the first CG resource or the second CG resource. Alternatively, the configuration information may configure a plurality of CG resources, and the CG resource referred to in the example is any one of the plurality of CG resources. Optionally, one piece of configuration information may be carried by the RRC signaling or by both the RRC signaling and the DCI. One RRC signaling may be used to configure all or partial parameters of one or more CG resources. One dynamic signaling may be used to configure other parameters of the one or more CG resources and to activate or deactivate the one or more CG resources. Those skilled in the art may configure this based on actual requirements, and which is not specifically limited by the disclosure.

In an implementation, all parameters of the first CG resource may be specifically configured by the RRC signaling without requiring DCI activation or deactivation. Partial parameters of the second CG resource may be configured by the RRC signaling, and other parameters of the second CG resource may be configured by the DCI. The other parameters may include, for example, a time-frequency domain resource. The DCI may also be configured to activate or deactivate the second CG resource.

In an embodiment, the first CG resource may be any resource with a time-frequency resource configured by the RRC signaling. The second CG resource may be any resource with partial parameters configured by the RRC signaling and other parameters configured by the DCI. Optionally, the first CG resource may correspond to, for example, a configured grant type 1, and the second CG resource may correspond to, for example, a configured grant type 2. Alternatively, the first CG resource may be, for example, a semi-persistently scheduled CG resource, and the second CG resource may be, for example, a dynamically scheduled CG resource. The name of the resource does not necessarily limit the resource itself. For example, the first CG resource may also be described as a "first type CG resource", and the second CG resource may also be described as a "second type CG resource".

In another example, the configuration information indicates the plurality of CG resources for transmitting the SL-PRS. The plurality of CG resources includes at least one first CG resource and/or at least one second CG resource. In this case, the configuration information may indicate the plurality of CG resources for transmitting the SL-PRS, making transmitting of the SL-PRS by the terminal more flexible.

For example, the base station may configure the plurality of CG resources for the terminal for transmitting the SL-PRS. The plurality of CG resources may include first CG resources and/or second CG resources. That is, the plurality of CG resources may all be the first CG resources, or may all be the second CG resources, or may partially be the first CG resources and partially be the second CG resources. Correspondingly, if the base station configures the plurality of CG resources for transmitting the SL-PRS, each CG resource may be set as the configured grant type 1 or the configured grant type 2.

In an example, the configuration information includes a period of the CG resource. A unit of the period is one of: second, millisecond, a number of slots, a number of symbols, or a number of subframes.

In addition, specific values of seconds, milliseconds, slots, symbols, or subframes are not limited by the disclosure. The base station may configure the period based on scheduling requirements and capabilities of the terminal.

In an example, the configuration information includes a time offset. The time offset represents an offset of a start time of the CG resource relative to a reference time. Optionally, the time offset may indicate a start time offset of the CG resource relative to the reference time. A unit of the time offset may be one of second, millisecond, a number of slots, a number of symbols, or a number of subframes.

In an example, the configuration information includes a reference time. The reference time is configured to determine the start time of the CG resource.

In a possible implementation, the reference time is represented by a reference logical slot. If the configuration information includes the parameter, the terminal may use a first logical slot after a start time corresponding to a most recent SFN before receiving the configuration information as the reference logical slot. The first logical slot may be a first logical slot of a resource pool associated with the CG resource. If the parameter is not included, an SFN corresponding to the reference time may be 0.

In an example, the configuration information includes at least one of: a resource pool ID; a start sub-channel index; an SL sub-channel size; a comb size of the SL-PRS; a comb offset of the SL-PRS; a number of OFDM symbols occupied by the SL-PRS; a start OFDM symbol offset of the SL-PRS; one or more SL-PRS sequence IDs; information indicating whether to perform SL-PRS sequence hopping; information indicating whether to perform SL-PRS frequency hopping; a number of ports; a port index; a number of repetitions for transmitting the SL-PRS; an index indication of the CG resource; an SL logical channel ID associated with the CG resource; a transport layer address associated with the CG resource; or an SLPP session ID associated with the CG resource. Optionally, the configuration information may also include a number of SL sub-channels. In some possible implementations, the configuration information may include only any one of the SL sub-channel size and the number of SL sub-channels. In other possible implementations, the configuration information may include all the above information. Those skilled in the art may configure this based on actual requirements, and the disclosure does not limit this. In this case, the configuration information may not only indicate the configuration information of the CG resource but may also specifically configure resource occupation for the terminal to transmit the SL-PRS, thus more reliably implementing grant-free SL-PRS transmitting based on the CG.

In some embodiments, SL frequency domain resources are divided on a sub-channel basis. Available SL frequency domain resources may be determined based on the start sub-channel index and the SL sub-channel size. The comb size may be used to determine a number of SL-PRSs that may be multiplexed in the frequency domain. Frequency domain multiplexing may be implemented through a frequency domain offset. The comb offset may be configured to determine the frequency domain offset of the SL-PRS. In addition, the number of OFDM symbols occupied by the SL-PRS and the start OFDM symbol offset of the SL-PRS may be configured to determine SL time domain resources. The SL-PRS sequence ID may be configured to determine a code sequence used by the SL-PRS. In other embodiments, the information indicating whether to perform the SL-PRS sequence hopping may be specifically configured to determine whether code sequences used by SL-PRSs transmitted at different times are changed to different code sequences based on a certain rule. The information indicating whether to perform the SL-PRS frequency hopping may be configured to determine whether frequency domain resources used by the SL-PRSs transmitted at different times are changed to different frequency domain resources based on the certain rule. In additionally, the number of ports and the port index may be configured to determine antenna ports used to transmit the SL-PRS. In some embodiments, the terminal may be configured with the plurality of CG resources, and each CG resource may be identified by an index indication of the CG resource. Optionally, the SL logical channel ID associated with the CG resource may be applicable to a scheme of carrying the SL-PRS using an SL-U method.

In addition, in the above optional embodiments, since the configuration information may be used to configure the plurality of CG resources, correspondingly, the configuration information may include a period, a time offset, or a reference time for each CG resource. Similarly, the configuration information may be used to configure parameters for transmitting one SL-PRS, part of the SL-PRSs, or all SL-PRSs in each CG resource of the plurality of CG resources.

In an example, the configuration information does not include at least one of: a number of HARQ processes; an HARQ process offset; a maximum number of transmissions; or a slot offset between a PSFCH and a PUCCH. For example, the configuration information may not carry all the above information or may carry only one of them. Those skilled in the art may configure this based on actual requirements, and the disclosure does not limit this. In this case, since the SL-PRS is not data transmission and does not require retransmission or ACK (acknowledge character) feedback, the HARQ is not functional. Thus, the configuration information may exclude the above parameters to save resources occupied by transmitting the data.

In another example, the configuration information includes a configuration sequence corresponding to an SL-PRS sequence. The configuration sequence includes configuration parameters respectively corresponding to a plurality of SL-PRSs in the SL-PRS sequence. Configuration parameters corresponding to each SL-PRS includes at least one of: a port index, a number of repetitions for transmitting the SL-PRS, a start OFDM symbol offset, or a comb offset. In this case, each SL-PRS in the sequence may be configured for each SL-PRS sequence, further ensuring reliability of the SL-PRS transmitting.

In an example, before step S801, the method may further include the following step: receiving network capability information.

For details of the step, refer to the detailed description corresponding to step S902 shown in FIG. 9, which will not be repeated here.

In some embodiments, the configuration information transmitted by the base station in step S201 may be configured based on the network capability information transmitted in the step.

In an example, step S801 may include: transmitting configuration information for configuring the first CG resource.

For details of this step, refer to the detailed description corresponding to step S1001 shown in FIG. 10, which will not be repeated here.

In some embodiments, the method may further include: transmitting a first signaling for deconfiguring the first CG resource.

For example, after receiving the first signaling, the terminal may deconfigure the first CG resource based on the first signaling and, based on a protocol, stop transmitting the SL-PRS on the deconfigured first CG resource. Further, the terminal stopping transmitting the SL-PRS may be instructed by the first signaling or may be executed by the terminal based on a protocol in response to determining that the first CG resource is deconfigured. For example, stopping transmitting the SL-PRS may specifically refer to stopping transmitting the SL-PRS on the currently deconfigured first CG resource, while the terminal may continue periodically transmitting the SL-PRS on other first CG resources that are not deconfigured.

The base station may transmit the first signaling instructing the terminal to deconfigure the first CG resource. The first CG resource may be any one or more first CG resources configured by the base station for the terminal. The first signaling may be, for example, a RRC signaling, which may also carry partial or complete new configuration information.

In other optional embodiments, the method may further include: transmitting the new configuration information, in which the new configuration information is configured to reconfigure the first CG resource.

For example, after receiving the new configuration information, the terminal may reconfigure the first CG resource based on the new configuration information. After configuration is completed, the terminal may transmit the SL-PRS based on the period corresponding to the new configuration information. Further, transmitting the SL-PRS by the terminal based on the period corresponding to the new configuration information may be instructed by the new configuration information or may be executed by the terminal based on a protocol in response to determining that the first CG resource is reconfigured. In additionally, the new configuration information may be used to reconfigure any one or more first CG resources of the first CG resources. For any first CG resource, if the terminal determines that the new configuration information reconfigures the first CG resource, the terminal may transmit the SL-PRS based on a reconfigured period. If the terminal determines that the new configuration information does not reconfigure the first CG resource, the terminal may transmit the SL-PRS based on a previous period.

In an example, the method may further include: transmitting DCI for activating a second CG resource.

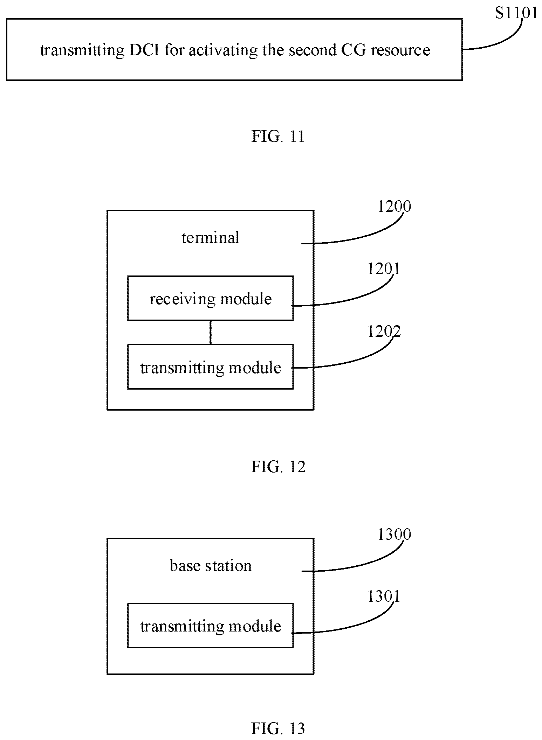

For details of this step, refer to the detailed description corresponding to step S1101 shown in FIG. 11, which will not be repeated here.

In some optional embodiments, the method may further include: transmitting DCI for deactivating the second CG resource.

The second CG resource may be any one or more second CG resources previously configured and activated by the base station for the terminal. After receiving the DCI, the terminal may stop transmitting the SL-PRS on the second CG resource corresponding to the DCI. The terminal stopping transmitting the SL-PRS may be instructed by the DCI. Alternatively, after receiving the DCI, the terminal may first deactivate the second CG resource corresponding to the DCI and then stop transmitting the SL-PRS based on a protocol after deactivation.

For example, the second CG resource deactivated by the DCI may be any one or more of a plurality of currently activated second CG resources. Stopping transmitting the SL-PRS may specifically refer to stopping transmitting the SL-PRS on the currently deactivated second CG resource, while the terminal may continue periodically transmitting the SL-PRS on other second CG resources that are not deactivated.

In the embodiments of the disclosure, by transmitting the configuration information, the terminal is enabled to determine the CG resource for transmitting the SL-PRS based on the configuration information and further transmit the SL-PRS based on the CG resource configured by the configuration information. As such, grant-free transmission of the SL-PRS based on the CG is reliably implemented, and thus sidelink positioning between terminals is implemented.

Without conflict, the embodiments of the disclosure may be combined with embodiments or implementations and various optional solutions related to other methods for transmitting an SL-PRS. This will not be repeated here.

FIG. 9 is a flowchart illustrating a method for transmitting an SL-PRS according to an illustrative embodiment. The method is applied to a base station. As shown in FIG. 9, the method includes the following steps S901 to S902.

At S901, network capability information is received.

In an example, the network capability information indicates at least one of: a maximum number of CG resources supported by the terminal; a maximum number of first CG resources supported by the terminal; a maximum number of second CG resources supported by the terminal; or a maximum number of SL-PRS ports supported by the terminal within one SL-PRS resource.

It should be noted that the SL-PRS resource may be any time-frequency resource used by the terminal to transmit the SL-PRS, for example, a CG resource, a dynamically scheduled resource, or a resource selected by the terminal, which is not specifically limited by the disclosure.

In some implementations, the network capability information may only indicate the maximum number of CG resources supported by the terminal. For example, the base station may configure the configuration information for the terminal based on the maximum number of CG resources, so that a number of CG resources indicated by the configuration information is less than the maximum number.

In other implementations, the network capability information may indicate the maximum number of CG resources supported by the terminal and the maximum number of first CG resources supported by the terminal. For example, the base station may configure the configuration information for the terminal based on the capability information, so that the number of CG resources indicated by the configuration information is less than or equal to the maximum number of CG resources supported by the terminal, and a number of first CG resources among the CG resources is less than or equal to the maximum number of first CG resources supported by the terminal. Optionally, other CG resources among the CG resources excluding the first CG resources may all be second CG resources.

In other implementations, the network capability information may only indicate the maximum number of SL-PRS ports supported by the terminal within one SL-PRS resource. For example, the base station may configure the SL-PRS ports for the CG resource indicated by the configuration information based on the maximum number of SL-PRS ports, so that a number of SL-PRS ports of the CG resource is less than or equal to the maximum number of SL-PRS ports.

It may be understood that the above implementations are only illustrative introductions to information that may be included in the network capability information. To save space, the embodiments of the disclosure do not introduce every combination of the plurality of pieces of information described above. Those skilled in the art may select specific content included in the network capability information based on actual requirements.

At S902, the configuration information is transmitted, in which the configuration information at least indicates a CG resource for transmitting the SL-PRS.

For details of step S901, refer to the detailed description of step S801 shown in FIG. 8, which will not be repeated here.

In the embodiments of the disclosure, by transmitting the network capability information, the base station may configure the configuration information for the terminal based on the network capability information, so that the terminal determines the CG resource for transmitting the SL-PRS based on the configuration information, and causes the terminal to transmit the SL-PRS based on the CG resource configured by the configuration information. As such, grant-free transmission of the SL-PRS based on the CG based on network capability of the terminal is reliably implemented, and thus sidelink positioning between terminals is implemented.

Without conflict, the embodiments of the disclosure may be combined with embodiments or implementations and various optional solutions related to other methods for transmitting an SL-PRS, which will not be repeated here.

FIG. 10 is a flowchart illustrating a method for transmitting an SL-PRS according to an illustrative embodiment. The method is applied to a base station. As shown in FIG. 10, the method includes the following steps S1001 to S1002.

At S1001: configuration information for configuring a first CG resource is transmitted.

The configuration information may include a period of the first CG resource. A unit of the period is one of: second, millisecond, a number of slots, a number of symbols, or a number of subframes. Optionally, the configuration information may also instruct the terminal to periodically transmit the SL-PRS on the first CG resource based on the period. Alternatively, the terminal may determine by itself whether to transmit the SL-PRS on the first CG resource based on the period corresponding to the configuration information based on a protocol. It should be understood that the configuration information may be carried by a RRC signaling. The configuration information may indicate one or more CG resources. When there are a plurality of CG resources, the plurality of CG resources may include one or more first CG resources and/or one or more second CG resources. Correspondingly, the configuration information may include a period for each first CG resource and may also include a period for each second CG resource. That is, the RRC signaling may include a period for each first CG resource.

For the first CG resource, after receiving the configuration information (e.g., the RRC signaling for configuring the first CG resource), the terminal may periodically transmit the SL-PRS based on the period corresponding to the first CG resource carried in the configuration information, that is, the RRC signaling. That is, if the configuration information indicates a plurality of first CG resources for transmitting the SL-PRS, the terminal may periodically transmit the SL-PRS based on a period corresponding to each first CG resource.

In some optional embodiments, the method may further include: transmitting a first signaling for deconfiguring the first CG resource.

Further, after receiving the first signaling, the terminal may deconfigure the first CG resource based on the first signaling and, based on a protocol, stop transmitting the SL-PRS on the first CG resource after deconfiguration. Further, the terminal stopping transmitting the SL-PRS may be instructed by the first signaling or may be executed by the terminal based on a protocol in response to determining that the first CG resource is deconfigured.

Specifically, stopping transmitting the SL-PRS may specifically refer to stopping transmitting the SL-PRS on the currently deconfigured first CG resource, while the terminal may continue periodically transmitting the SL-PRS on other first CG resources that are not deconfigured.

The base station may transmit a first signaling instructing the terminal to deconfigure the first CG resource. The first CG resource may be any one or more first CG resources configured by the base station for the terminal. The first signaling may be, for example, a RRC signaling, which may also carry partial or complete new configuration information.

In other optional embodiments, the method may further include: transmitting new configuration information, in which the new configuration information is configured to reconfigure the first CG resource.

Further, after receiving the new configuration information, the terminal may reconfigure the first CG resource based on the new configuration information. After configuration is completed, the terminal may transmit the SL-PRS based on the period corresponding to the new configuration information. Further, the terminal transmitting the SL-PRS based on the period corresponding to the new configuration information may be instructed by the new configuration information or may be executed by the terminal based on a protocol in response to determining that the first CG resource is reconfigured. In additionally, the new configuration information may be used to reconfigure any one or more first CG resources of the plurality of first CG resources. For any first CG resource, if the terminal determines that the new configuration information reconfigures the first CG resource, the terminal may transmit the SL-PRS based on a reconfigured period. If the terminal determines that the new configuration information does not reconfigure the first CG resource, the terminal may transmit the SL-PRS based on a previous period.

Further, for details of which information is included or not included in the configuration information, refer to the content described in the embodiment or implementation corresponding to FIG. 8, which will not be repeated in the embodiment.

It should be understood that the terminal may transmit a plurality of SL-PRSs via a plurality of periods. A time-frequency resource occupied by transmitting each SL-PRS may be configured by the configuration information. Further, the plurality of SL-PRSs may form one or more SL-PRS sequences. Resources may be configured for each SL-PRS sequence via the configuration information. Specifically, each SL-PRS in each SL-PRS sequence may be configured with one or more parameters such as a port index, a number of repetitions for transmitting the SL-PRS, a start OFDM symbol offset, or a comb offset.

In the embodiments of the disclosure, by transmitting the RRC signaling carrying the configuration information, the terminal is enabled to determine the CG resource for transmitting the SL-PRS and the period corresponding to the first CG resource based on the configuration information, and further periodically transmit the SL-PRS based on the CG resource configured by the configuration information and the period corresponding to the first CG resource. As such, grant-free transmission of the SL-PRS based on the CG is reliably implemented, and thus sidelink positioning between terminals is implemented.

Without conflict, the embodiments of the disclosure may be combined with embodiments or implementations and various optional solutions related to other methods for transmitting an SL-PRS, which is not be repeated here.

FIG. 11 is a flowchart illustrating a method for transmitting an SL-PRS according to an illustrative embodiment. The method is applied to a base station. As shown in FIG. 11, the method includes the following step S1101.

At S1101, DCI for activating a second CG resource is transmitted.

Optionally, before step S1101, the base station may first transmit a RRC signaling for configuring partial parameters of the second CG resource. In additionally, the RRC signaling may further configure other first CG resources, for example, the RRC signaling may carry the configuration information in step S1001 of the foregoing embodiment. The DCI in step S1101 may not only activate the second CG resource but also configure a time-frequency resource of the second CG resource.

The above RRC and the DCI may carry the configuration information. Further, for details of which information is included or not included in the configuration information, refer to the content described in the embodiment or implementation corresponding to FIG. 8, which will not be repeated in this embodiment.

Optionally, the DCI may also instruct the terminal to periodically transmit the SL-PRS on the second CG resource according to a period. Alternatively, the terminal may determine by itself whether to start periodically transmitting the SL-PRS on the second CG resource based on a protocol.

For example, for the second CG resource, after receiving the configuration information (i.e., the RRC signaling for configuring the second CG resource) and receiving dynamic signaling such as the DCI for activating the second CG resource, the terminal may periodically transmit the SL-PRS based on a period corresponding to the second CG resource carried in the configuration information (i.e., the RRC signaling and/or the dynamic signaling). That is, if the configuration information indicates a plurality of second CG resources for transmitting the SL-PRS, the terminal may periodically transmit the SL-PRS according to a period corresponding to each activated second CG resource.

In some optional embodiments, the method may further include: transmitting DCI for deactivating the second CG resource.

The second CG resource may be any one or more second CG resources previously configured and activated by the base station for the terminal. After receiving the DCI, the terminal may stop transmitting the SL-PRS on the second CG resource corresponding to the DCI. The terminal stopping transmitting the SL-PRS may be instructed by the DCI. Alternatively, after receiving the DCI, the terminal may first deactivate the second CG resource corresponding to the DCI and then stop transmitting the SL-PRS based on a protocol after deactivation.

Specifically, the second CG resource deactivated by the DCI may be any one or more of a plurality of currently activated second CG resources. Stopping transmitting the SL-PRS may specifically refer to stopping transmitting the SL-PRS on the currently deactivated second CG resource, while the terminal may continue periodically transmitting the SL-PRS on other second CG resources that are not deactivated.

In the embodiments of the disclosure, by transmitting the RRC signaling and the DCI carrying the configuration information, activating the CG resource for transmitting the SL-PRS and the period corresponding to the second CG resource indicated by the configuration information via the DCI, and further the SL-PRS is periodically transmitted based on the CG resource configured by the configuration information and the period corresponding to the second CG resource, grant-free transmission of the SL-PRS based on the CG may be reliably implemented, and thus sidelink positioning between terminals is implemented.

Based on the same inventive concept, to enable those skilled in the art to better understand the technical solutions provided by the disclosure, the disclosure further provides the following embodiments.

A terminal receives configuration information for a CG resource for SL-PRS transmitting configured by a base station via a RRC, and transmits the SL-PRS based on the CG resource.

The terminal may be configured with a plurality of CG resources for transmitting the SL-PRS.

Optionally, the CG resource may be configured grant type 1 or configured grant type 2.

A time-frequency resource for the configured grant type 1 is configured by a RRC signaling, without requiring DCI indication, and without requiring DCI activation/deactivation. Partial parameters for the configured grant type 2 are configured by the RRC signaling, while time-frequency resources for the configured grant type 2 are indicated by DCI, and requires the DCI activation/deactivation.

In additionally, if a plurality of CG resources are configured for transmitting the SL-PRS, each CG resource in the plurality of CG resources may be set as the configured grant type 1 or the configured grant type 2.

Optionally, the terminal reports network capability information, in which the network capability information indicates a maximum number of CG resources supported by the terminal.

Optionally, the terminal reports the network capability information, in which the network capability information indicates a maximum number of configured grant type 1 resources and/or a maximum number of SL-PRS configured grant type 2 resources supported by the terminal.

Optionally, for the configured grant type 1 resources and/or the configured grant type 2 resources, the configuration information includes a period for each CG resource. A unit of the period is one of: second, millisecond, a number of slots, a number of symbols, or a number of subframes.

Optionally, for the configured grant type 1 resources and/or the configured grant type 2 resources, the configuration information includes a time offset. The time offset represents a start time offset of the CG resource relative to a reference time. The unit may be second, millisecond, a number of slots, a number of symbols, or a number of subframes.

Optionally, for the configured grant type 1 resources and/or the configured grant type 2 resources, the configuration information includes a reference time. The reference time is configured to determine a reference time for the start time offset of the CG resource.

The reference time represents a reference logical slot. If the parameter is configured, the terminal determines a first logical slot of a resource pool associated with the CG resource after a start time of a most recent SFN before receiving the configuration information of the CG resource as the reference logical slot. If the parameter does not included, an SFN corresponding to the reference time is 0 (a reference SFN is 0).

Optionally, for the configured grant type 1 resources and/or the configured grant type 2 resources, the RRC configuration information includes one or more of the following: a resource pool ID; a start sub-channel index; an SL sub-channel size (i.e., a number of sub-channels); a comb size of the SL-PRS; a comb offset of the SL-PRS; a number of OFDM symbols occupied by the SL-PRS; a start OFDM symbol offset of the SL-PRS; one or more SL-PRS sequence IDs; whether to perform SL-PRS sequence hopping; whether to perform SL-PRS frequency hopping; a number of ports; a port index; a number of repetitions for transmitting the SL-PRS; an index indication of the CG resource; an SL logical channel ID associated with the CG resource, which is applicable when SL positioning is carried over SL-U; a transport layer address associated with the CG resource; or a SLPP session ID associated with the CG resource.

Optionally, the terminal reports the network capability information, in which the network capability information indicates a maximum number of SL-PRS ports supported by the terminal within one SL-PRS resource.

Optionally, for the configured grant type 1 resources and/or the configured grant type 2 resources, the configuration information does not include at least one of: a number of HARQ processes; an HARQ process offset; a maximum number of transmissions; or a slot offset between a PSFCH and a PUCCH.

Optionally, for each SL-PRS sequence, at least one of the following may be configured: a port index, a number of repetitions for transmitting the SL-PRS, a start OFDM symbol offset, or a comb offset.

Optionally, for the configured grant type 1 resources (first CG resources), after receiving the configured grant type 1 resources configured by the RRC, for each first CG resource, the terminal starts periodically transmitting the SL-PRS on a time-frequency resource of the first CG resource based on a configured period until the first CG resource is deconfigured. If updated configuration information corresponding to the first CG resource is received, the terminal transmits the SL-PRS based on an updated configuration.

Optionally, for each configured grant type 2 resource (a second CG resource), after receiving configuration of the second CG resource configured by the RRC and receiving an activation indication for the second CG resource transmitted via PDCCH DCI, the terminal starts periodically transmitting the SL-PRS on a time-frequency resource of the second CG resource based on a period of the second CG resource, until receiving a deactivation indication for the second CG resource transmitted via the PDCCH DCI.

Optionally, for a transmission occasion of CG, the terminal transmits the SL-PRS on the transmission occasion only when an upper layer of the terminal instructs to transmit the SL-PRS. The upper layer of the terminal is an upper layer relative to a MAC layer or a physical layer.

For example, if there is an SL-PRS transmitting triggered by the upper layer of the terminal and the trigger has not been canceled, after a transmission occasion corresponding to the CG resource arrives, if the transmission occasion may be used to transmit the SL-PRS, the terminal transmits the SL-PRS via the CG resource.

For example, after transmitting the SL-PRS, the terminal cancels the triggered SL-PRS transmitting. Alternatively, after transmitting the SL-PRS, if the SL-PRS is transmitted once, the terminal cancels the triggered SL-PRS transmitting. If the SL-PRS is transmitted periodically or semi-persistently, the terminal cancels the triggered SL-PRS transmitting when the upper layer instructs to cancel transmitting.

For example, after one transmission occasion of the CG resource arrives, if there is no triggered and uncanceled SL-PRS transmitting for the terminal, the terminal does not transmit the SL-PRS during the transmission occasion of the CG resource.

Optionally, when the upper layer of the terminal instructs to transmit the SL-PRS, the upper layer of the terminal also indicates one or more of: an SL-PRS sequence ID; a bandwidth requirement; a latency requirement; or a period.

Optionally, before using the CG resource to transmit the SL-PRS, the terminal first determines whether the CG resource is available for transmitting the SL-PRS. The terminal determining whether one CG resource is available for transmitting the SL-PRS includes one or more combinations of the following conditions: the CG resource specifying one or more SL-PRS sequence IDs, and the one or more IDs including one or more IDs provided by the upper layer; the upper layer providing a bandwidth requirement, and an SL-PRS transmitting bandwidth corresponding to the CG resource satisfying the bandwidth requirement; the upper layer providing a latency requirement, and a transmission occasion of the CG resource satisfying the latency requirement; the upper layer specifying a transmitting period of the SL-PRS, and a period of the CG resource satisfying a transmitting period requirement of the SL-PRS; or satisfying the transmitting period requirement of the SL-PRS, for example, the transmitting period of the SL-PRS being an integer multiple of the period of the CG resource.

FIG. 12 is a block diagram illustrating a terminal according to an illustrative embodiment. As shown in FIG. 12, the terminal 1200 includes a receiving module 1201 and a transmitting module 1202.

The receiving module 1201 is configured to receive configuration information, in which the configuration information at least indicates a CG resource for transmitting a SL-PRS.

The transmitting module 1202 is configured to transmit the SL-PRS based on the configuration information.

Optionally, the CG resource is a first CG resource or a second CG resource. A time-frequency resource for the first CG resource is configured by a RRC signaling. Partial parameters for the second CG resource are configured by the RRC signaling, a time-frequency resource for the second CG resource is configured by DCI, and the DCI is also configured to activate or deactivate the second CG resource.

Optionally, the configuration information indicates a plurality of CG resources for transmitting the SL-PRS. The plurality of CG resources includes at least one first CG resource and/or at least one second CG resource.

Optionally, the terminal 1200 includes a first transmitting module, configured to transmit network capability information, in which the network capability information indicates at least one of: a maximum number of CG resources supported by the terminal; a maximum number of first CG resources supported by the terminal; a maximum number of second CG resources supported by the terminal; or a maximum number of SL-PRS ports supported by the terminal within one SL-PRS resource.

Optionally, the configuration information includes a period of the CG resource, and a unit of the period is one of: second, millisecond, a number of slots, a number of symbols, or a number of subframes.

Optionally, the configuration information includes a time offset, and the time offset represents an offset of a start time of the CG resource relative to a reference time.

Optionally, the configuration information includes a reference time, and the reference time is configured to determine a start time of the CG resource.

Optionally, the configuration information includes a period of the CG resource, and the transmitting module 1202 is configured to periodically transmit the SL-PRS on the first CG resource based on the period.

Optionally, the transmitting module 1202 is configured to, in response to determining that the first CG resource is deconfigured, stop transmitting the SL-PRS.

Optionally, the transmitting module 1202 is configured to, in response to receiving new configuration information for reconfiguring the first CG resource, transmit the SL-PRS based on a period corresponding to the new configuration information.

Optionally, the configuration information includes a period of the CG resource, and the transmitting module 1202 is configured to, in response to receiving DCI for activating the second CG resource, periodically transmit the SL-PRS on the second CG resource based on the period.

Optionally, the transmitting module 1202 is configured to, in response to receiving DCI for deactivating the second CG resource, stopping transmitting the SL-PRS.

Optionally, the configuration information includes at least one of: a resource pool ID; a start sub-channel index; an SL sub-channel size; a comb size of the SL-PRS; a comb offset of the SL-PRS; a number of OFDM symbols occupied by the SL-PRS; a start OFDM symbol offset of the SL-PRS; one or more SL-PRS sequence IDs; information indicating whether to perform SL-PRS sequence hopping; information indicating whether to perform SL-PRS frequency hopping; a number of ports; a port index; a number of repetitions for transmitting the SL-PRS; an index indication of the CG resource; an SL logical channel ID associated with the CG resource; a transport layer address associated with the CG resource; or an SLPP session ID associated with the CG resource.

Optionally, the configuration information does not include at least one of: a number of HARQ processes; an HARQ process offset; a maximum number of transmissions; or a slot offset between a PSFCH and a PUCCH.

Optionally, the configuration information includes a configuration sequence corresponding to an SL-PRS sequence. The configuration sequence including configuration parameters respectively corresponding to a plurality of the SL-PRSs in the SL-PRS sequence. Configuration parameters corresponding to each SL-PRS includes at least one of: a port index, a number of repetitions for transmitting the SL-PRS, a start OFDM symbol offset, or a comb offset.

Optionally, the transmitting module 1202 is configured to, for any SL-PRS transmission occasion in the CG resource, in response to determining that the upper layer of the terminal instructs to transmit the SL-PRS, transmit the SL-PRS.

Optionally, when the upper layer of the terminal instructs to transmit the SL-PRS, the upper layer of the terminal further indicates at least one of: an SL-PRS sequence ID; a bandwidth requirement; a latency requirement; or a transmitting period of the SL-PRS.

Optionally, the terminal includes a determining module, configured to, before transmitting the SL-PRS, determine whether the CG resource is available for transmitting the SL-PRS based on a preset condition, in which the preset condition includes at least one of: one or more SL-PRS sequence IDs corresponding to the CG resource including the SL-PRS sequence ID indicated by the upper layer of the terminal; an SL-PRS transmitting bandwidth corresponding to the CG resource satisfying the bandwidth requirement; a transmission occasion corresponding to the CG resource satisfying the latency requirement; or a period of the CG resource satisfying a transmitting period requirement corresponding to the transmitting period.

FIG. 13 is a block diagram illustrating a base station according to an illustrative embodiment. As shown in FIG. 13, the base station 1300 includes a transmitting module 1301.

The transmitting module 1301 is configured to transmit configuration information, in which the configuration information at least indicates a CG resource for transmitting an SL-PRS.

Optionally, the CG resource is a first CG resource or a second CG resource. A time-frequency resource for the first CG resource is configured by a RRC signaling. Partial parameters for the second CG resource are configured by the RRC signaling, a time-frequency resource for the second CG resource is configured by DCI, and the DCI is also configured to activate or deactivate the second CG resource.

Optionally, the configuration information indicates a plurality of CG resources for transmitting the SL-PRS. The plurality of CG resources includes at least one first CG resource and/or at least one second CG resource.

Optionally, the base station 1200 includes a receiving module, configured to receive network capability information, in which the network capability information indicates at least one of: a maximum number of CG resources supported by the terminal; a maximum number of first CG resources supported by the terminal; a maximum number of second CG resources supported by the terminal; or a maximum number of SL-PRS ports supported by the terminal within one SL-PRS resource.

Optionally, the configuration information includes a period of the CG resource, and a unit of the period is one of: second, millisecond, a number of slots, a number of symbols, or a number of subframes.

Optionally, the configuration information includes a time offset, and the time offset represents an offset of a start time of the CG resource relative to a reference time.

Optionally, the configuration information includes a reference time, and the reference time is configured to determine the start time of the CG resource.

Optionally, the configuration information includes the period of the CG resource, and the transmitting module 1301 is configured to transmit configuration information for configuring the first CG resource.

Optionally, the transmitting module 1301 is configured to transmit a first signaling for deconfiguring the first CG resource.

Optionally, the transmitting module 1301 is configured to transmit new configuration information, in which the new configuration information is configured to reconfigure the first CG resource.

Optionally, the transmitting module 1301 is configured to transmit DCI for activating the second CG resource.

Optionally, the transmitting module 1301 is configured to transmit DCI for deactivating the second CG resource.

Optionally, the configuration information includes at least one of: a resource pool ID; a start sub-channel index; an SL sub-channel size; a comb size of the SL-PRS; a comb offset of the SL-PRS; a number of OFDM symbols occupied by the SL-PRS; a start OFDM symbol offset of the SL-PRS; one or more SL-PRS sequence IDs; information indicating whether to perform SL-PRS sequence hopping; information indicating whether to perform SL-PRS frequency hopping; a number of ports; a port index; a number of repetitions for transmitting the SL-PRS; an index indication of the CG resource; an SL logical channel ID associated with the CG resource; a transport layer address associated with the CG resource; or an SLPP session ID associated with the CG resource.

Optionally, the configuration information does not include at least one of: a number of HARQ processes; an HARQ process offset; a maximum number of transmissions; or a slot offset between a PSFCH and a PUCCH.

Optionally, the configuration information includes a configuration sequence corresponding to an SL-PRS sequence, the configuration sequence includes configuration parameters respectively corresponding to a plurality of the SL-PRSs in the SL-PRS sequence, configuration parameters corresponding to each SL-PRS including at least one of: a port index, a number of repetitions for transmitting the SL-PRS, a start OFDM symbol offset, or a comb offset.

For the apparatus in the foregoing embodiments, specific methods for operations of respective modules have been described in detail in the embodiments related to the methods and will not be elaborated here.

It should be noted that the time-frequency resources involved in the foregoing embodiments may specifically refer to time domain resources and/or frequency domain resources.

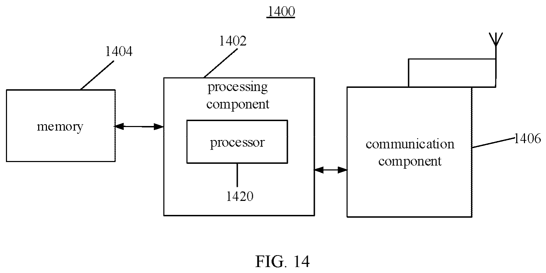

FIG. 14 is a block diagram illustrating a communication device according to an illustrative embodiment. The communication device 1400 may be a terminal device in the communication system shown in FIG. 1 or a network device in a communication system.

Referring to FIG. 14, the device 1400 may include one or more of the following components: a processing component 1402, a memory 1404, and a communication component 1406.

The processing component 1402 typically controls overall operations of the device 1400, such as operations associated with display, telephone calls, data communications, camera operations, and recording operations. The processing component 1402 may include one or more processors 1420 to execute instructions to perform all or part of steps in the above described methods. Moreover, the processing component 1402 may include one or more modules which facilitate interaction between the processing component 1402 and other components. For example, the processing component 1402 may include a multimedia module to facilitate interaction between a multimedia component and the processing component 1402.

The memory 1404 is configured to store various types of data to support the operations of the device 1400. Examples of such data include instructions for any applications or methods operated on the device 1400, contaction data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The communication component 1406 is configured to facilitate wired or wirelessly communication between the device 1400 and other devices. The device 1400 may access a wireless network based on a communication standard, such as Wi-Fi, 2G, 3G, 4G, 5G, 6G, NB-IoT or eMTC, or a combination thereof. In an illustrative embodiment, the communication component 1406 receives a broadcast signal or broadcast-related information from an external broadcast management system via a broadcast channel. In an illustrative embodiment, the communication component 1406 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In one or more exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

The device 1400 may be an independent electronic device or a part of an independent electronic device. For example, in an embodiment, the electronic device may be an integrated circuit (IC) or a chip. The IC may be a single IC or a collection of multiple ICs. The chip may include but is not limited to: a graphics processing unit (GPU), a central processing unit (CPU), a field programmable gate array (FPGA), a digital signal processor (DSP), an application specific integrated circuit (ASIC), or a system on chip (SoC). The IC or chip may be used to execute executable instructions (or code) to implement the foregoing method for transmitting an SL-PRS. The executable instructions may be stored in the IC or chip or obtained from other apparatuses or devices. For example, the IC or chip may include a processor, a memory, and an interface for communicating with other apparatuses. The executable instructions may be stored in the memory. When the executable instructions are executed by the processor, the method for transmitting an SL-PRS is implemented. Alternatively, the IC or chip may receive executable instructions through the interface and transmit them to the processor for execution to implement the method for transmitting the SL-PRS.

In an exemplary embodiment, the disclosure also provides a computer-readable storage medium storing computer program instructions. When executed by a processor, the program instructions implement steps of the method for transmitting an SL-PRS provided by the disclosure. For example, the computer-readable storage medium may be a non-transitory computer-readable storage medium including instructions, such as the memory 1404 described above. The instructions may be executed by a processor 1420 of the device 1400 to complete the method for transmitting an SL-PRS. For instance, the non-transitory computer-readable storage medium may be a read-only memory (ROM), a random access memory (RAM), a compact disc read-only memory (CD-ROM), a magnetic tape, a floppy disk, an optical data storage device, etc.

In another exemplary embodiment, a computer program product is provided. The computer program product contains a computer program executable by a programmable apparatus. The computer program has code portions that, when executed by the programmable apparatus, the method for transmitting an SL-PRS is performed.

It should be noted that in the foregoing embodiments, names of various modules, signals, and information do not necessarily limit themselves. For example, the configuration information may also be described as "information for indicating a CG resource for transmitting the SL-PRS", and a transmitting module may also be described as "a module for transmitting configuration information".

Other implementations of the embodiments of the disclosure will be readily apparent to those skilled in the art from consideration of the specification and practice of the disclosure disclosed herein. This application is intended to cover any modification, use or adaptation of the embodiments of the disclosure, these modifications, uses or adaptations follow general principles of the embodiments of the disclosure and include common knowledge or common technical means in the technical field not disclosed by the embodiments of the disclosure. The specification and examples are to be considered illustrative only, with a true scope and spirit of the embodiments of the disclosure being indicated by the following claims.

It should be understood that the embodiments of the disclosure are not limited to the precise structures described above and shown in the figures, and various modifications and changes can be made without departing from the scope thereof. The scope of embodiments of the disclosure is limited only by the appended claims.

## Claims

1. A method for transmitting a sidelink positioning reference signal (SL-PRS), applied to a terminal, comprising:
receiving configuration information, wherein the configuration information at least indicates a configured grant (CG) resource for transmitting the SL-PRS; and
transmitting the SL-PRS based on the configuration information.

2. The method according to claim 1, wherein the CG resource is a first CG resource or a second CG resource;
a time-frequency resource for the first CG resource is configured by a radio resource control (RRC) signaling;
partial parameters for the second CG resource are configured by the RRC signaling, a time-frequency resource for the second CG resource is configured by downlink control information (DCI), and the DCI is also configured to activate or deactivate the second CG resource.

3. The method according to claim 2, wherein the configuration information indicates a plurality of CG resources for transmitting the SL-PRS;
the plurality of CG resources comprises at least one first CG resource and/or at least one second CG resource.

4. The method according to claim 2 or 3, comprising:
transmitting network capability information;
wherein the network capability information indicates at least one of:
a maximum number of CG resources supported by the terminal;
a maximum number of first CG resources supported by the terminal;
a maximum number of second CG resources supported by the terminal; or
a maximum number of SL-PRS ports supported by the terminal within one SL-PRS resource.

5. The method according to any one of claims 1 to 4, wherein the configuration information comprises a period of the CG resource, and a unit of the period is one of: second, millisecond, slot, symbol, or subframe.

6. The method according to any one of claims 1 to 5, wherein the configuration information comprises a time offset, and the time offset represents an offset of a start time of the CG resource relative to a reference time.

7. The method according to any one of claims 1 to 6, wherein the configuration information comprises a reference time, and the reference time is configured to determine a start time of the CG resource.

8. The method according to claim 2, wherein the configuration information comprises a period of the CG resource, and transmitting the SL-PRS based on the configuration information comprises:
periodically transmitting the SL-PRS on the first CG resource based on the period.

9. The method according to claim 8, further comprising:
in response to determining that the first CG resource is deconfigured, stopping transmitting the SL-PRS.

10. The method according to claim 8 or 9, further comprising:
in response to receiving new configuration information for reconfiguring the first CG resource, transmitting the SL-PRS based on a period corresponding to the new configuration information.

11. The method according to claim 2, wherein the configuration information comprises a period of the CG resource, and transmitting the SL-PRS based on the configuration information comprises:
in response to receiving the DCI for activating the second CG resource, periodically transmitting the SL-PRS on the second CG resource based on the period.

12. The method according to claim 11, comprising:
in response to receiving the DCI for deactivating the second CG resource, stopping transmitting the SL-PRS.

13. The method according to any one of claims 1 to 12, wherein the configuration information comprises at least one of:
a resource pool identifier (ID);
a start sub-channel index;
an SL sub-channel size;
a comb size of the SL-PRS;
a comb offset of the SL-PRS;
a number of orthogonal frequency division multiplexing (OFDM) symbols occupied by the SL-PRS;
a start OFDM symbol offset of the SL-PRS;
one or more SL-PRS sequence IDs;
information indicating whether to perform SL-PRS sequence hopping;
information indicating whether to perform SL-PRS frequency hopping;
a number of ports;
a port index;
a number of repetitions for transmitting the SL-PRS;
an index indication of the CG resource;
an SL logical channel ID associated with the CG resource;
a transport layer address associated with the CG resource; or
a sidelink positioning protocol (SLPP) session ID associated with the CG resource.

14. The method according to any one of claims 1 to 13, wherein the configuration information does not comprise at least one of:
a number of hybrid automatic repeat request (HARQ) processes;
an HARQ process offset;
a maximum number of transmissions; or
a slot offset between a physical sidelink feedback channel (PSFCH) and a physical uplink control channel (PUCCH).

15. The method according to any one of claims 1 to 14, wherein the configuration information comprises a configuration sequence corresponding to an SL-PRS sequence, the configuration sequence comprises configuration parameters respectively corresponding to a plurality of the SL-PRSs in the SL-PRS sequence, and configuration parameters corresponding to each SL-PRS comprises at least one of: a port index, a number of repetitions for transmitting the SL-PRS, a start OFDM symbol offset, or a comb offset.

16. The method according to any one of claims 1 to 15, wherein transmitting the SL-PRS based on the configuration information comprises:
for any SL-PRS transmission occasion in the CG resource, in response to determining that an upper layer of the terminal instructs to transmit the SL-PRS, transmitting the SL-PRS.

17. The method according to claim 16, wherein when the upper layer of the terminal instructs to transmit the SL-PRS, the upper layer of the terminal further indicates at least one of: an SL-PRS sequence identifier (ID); a bandwidth requirement; a latency requirement; or a transmitting period of the SL-PRS.

18. The method according to claim 17, comprising:
before transmitting the SL-PRS, determining whether the CG resource is available for transmitting the SL-PRS based on a preset condition;
wherein the preset condition comprises at least one of:
one or more SL-PRS sequence IDs corresponding to the CG resource comprising the SL-PRS sequence ID indicated by the upper layer of the terminal;
an SL-PRS transmitting bandwidth corresponding to the CG resource satisfying the bandwidth requirement;
a transmission occasion corresponding to the CG resource satisfying the latency requirement; or
a period of the CG resource satisfying a transmitting period requirement corresponding to the transmitting period.

19. A method for transmitting a sidelink positioning reference signal (SL-PRS), applied to a base station, comprising:
transmitting configuration information, wherein the configuration information at least indicates a configured grant (CG) resource for transmitting the SL-PRS.

20. The method according to claim 19, wherein the CG resource is a first CG resource or a second CG resource;
a time-frequency resource for the first CG resource is configured by a radio resource control (RRC) signaling;
partial parameters for the second CG resource are configured by the RRC signaling, a time-frequency resource for the second CG resource is configured by downlink control information (DCI), and the DCI is also configured to activate or deactivate the second CG resource.

21. The method according to claim 20, wherein the configuration information indicates a plurality of CG resources for transmitting the SL-PRS;
the plurality of CG resources comprises at least one first CG resource and/or at least one second CG resource.

22. The method according to claim 20 or 21, comprising:
receiving network capability information;
wherein the network capability information indicates at least one of:
a maximum number of CG resources supported by the terminal;
a maximum number of first CG resources supported by the terminal;
a maximum number of second CG resources supported by the terminal; or
a maximum number of SL-PRS ports supported by the terminal within one SL-PRS resource.

23. The method according to any one of claims 19 to 22, wherein the configuration information comprises a period of the CG resource, and a unit of the period is one of: second, millisecond, slot, symbol, or subframe.

24. The method according to any one of claims 19 to 23, wherein the configuration information comprises a time offset, and the time offset represents an offset of a start time of the CG resource relative to a reference time.

25. The method according to any one of claims 19 to 24, wherein the configuration information comprises a reference time, and the reference time is configured to determine a start time of the CG resource.

26. The method according to claim 20, wherein the configuration information comprises a period of the CG resource, and transmitting configuration information of the CG comprises:
transmitting configuration information for configuring the first CG resource.

27. The method according to claim 26, further comprising:
transmitting a first signaling for deconfiguring the first CG resource.

28. The method according to claim 26 or 27, further comprising:
transmitting new configuration information, wherein the new configuration information is configured to reconfigure the first CG resource.

29. The method according to claim 20, wherein the configuration information comprises a period of the CG resource, and transmitting configuration information of the CG comprises:
transmitting DCI for activating the second CG resource.

30. The method according to claim 29, comprising:
transmitting DCI for deactivating the second CG resource.

31. The method according to any one of claims 19 to 30, wherein the configuration information comprises at least one of:
a resource pool identifier (ID);
a start sub-channel index;
an SL sub-channel size;
a comb size of the SL-PRS;
a comb offset of the SL-PRS;
a number of orthogonal frequency division multiplexing (OFDM) symbols occupied by the SL-PRS;
a start OFDM symbol offset of the SL-PRS;
one or more SL-PRS sequence IDs;
information indicating whether to perform SL-PRS sequence hopping;
information indicating whether to perform SL-PRS frequency hopping;
a number of ports;
a port index;
a number of repetitions for transmitting the SL-PRS;
an index indication of the CG resource;
an SL logical channel ID associated with the CG resource;
a transport layer address associated with the CG resource; or
a sidelink positioning protocol (SLPP) session ID associated with the CG resource.

32. The method according to any one of claims 19 to 31, wherein the configuration information does not comprise at least one of:
a number of hybrid automatic repeat request (HARQ) processes;
an HARQ process offset;
a maximum number of transmissions; or
a slot offset between a physical sidelink feedback channel (PSFCH) and a physical uplink control channel (PUCCH).

33. The method according to any one of claims 19 to 32, wherein the configuration information comprises a configuration sequence corresponding to an SL-PRS sequence, the configuration sequence comprises configuration parameters respectively corresponding to a plurality of the SL-PRSs in the SL-PRS sequence, and configuration parameters corresponding to each SL-PRS comprises at least one of: a port index, a number of repetitions for transmitting the SL-PRS, a start OFDM symbol offset, or a comb offset.

34. A terminal, comprising:
a receiving module, configured to receive configuration information, wherein the configuration information at least indicates a configured grant (CG) resource for transmitting a sidelink positioning reference signal (SL-PRS); and
a transmitting module, configured to transmit the SL-PRS based on the configuration information.

35. A base station, comprising:
a transmitting module, configured to transmit configuration information, wherein the configuration information at least indicates a configured grant (CG) resource for transmitting a sidelink positioning reference signal (SL-PRS).

36. A communication system, comprising:
a terminal, configured to perform the method according to any one of claims 1 to 18; and
a base station, configured to perform the method according to any one of claims 19 to 33.

37. A communication device, comprising:
a processor; and
a memory storing processor executable instructions;
wherein the processor is configured to perform steps of the method according to any one of claims 1 to 18 or perform steps of the method according to any one of claims 19 to 33.

38. A computer-readable storage medium, storing computer program instructions, wherein when the computer program instructions are executed by a processor, steps of the method according to any one of claims 1 to 18 are performed, or steps of the method according to any one of claims 19 to 33 are performed.
